# EUROPEAN PATENT APPLICATION

(11) **EP 4 120 734 A1**
(43) Date of publication of application: **18.01.2023**
(21) Application number: 21784488.5
(22) Date of filing: 07.04.2021
(51) Int. Cl.: H04W 28/26, H04L 1/18, H04W 72/04

(54) **COMMUNICATION METHOD AND DEVICE**

(30) Priority: 10.04.2020 CN 202010281183
(71) Applicant: Huawei Technologies Co., Ltd., Shenzhen, Guangdong 518129, (CN)
(72) Inventor: LIU, Jun, Shenzhen, Guangdong 518129 (CN); CHANG, Junren, Shenzhen, Guangdong 518129 (CN); XIE, Xi, Shenzhen, Guangdong 518129 (CN)
(74) Representative: Pfenning, Meinig & Partner mbB
(86) International application number: PCT/CN2021/085831
(87) International publication number: WO 2021/204164

(57) **Abstract**

This application provides a communication method and device. The method may include: When there is no reserved resource used to retransmit first transmission on a sidelink, a first communication device and/or a second communication device starts a first timer, and/or stops a second timer; or when there is a reserved resource used to retransmit first transmission on a sidelink, a first communication device and a second communication device stop a second timer. In this way, the first communication device and the second communication device can jointly control, by using the first timer and the second timer, the first communication device to receive data on the sidelink, so that the first communication device may not keep monitoring SCI that is associated with a HARQ process corresponding to the first transmission. This reduces power consumption.

## Description

This application claims priority to Chinese Patent Application No. 202010281183.4, filed with China National Intellectual Property Administration on April 10, 2020 and entitled "COMMUNICATION METHOD AND DEVICE", which is incorporated herein by reference in its entirety.

### TECHNICAL FIELD

This application relates to the communication field, and in particular, to a communication method and device.

### BACKGROUND

A new radio (new radio, NR) technology is a current mainstream wireless communication technology. For a vehicle to everything (vehicle to everything, V2X) service feature and a new service transmission requirement, the new radio technology can support V2X communication with a lower latency and higher reliability. However, on a sidelink (sidelink), receive user equipment (RX UE) keeps monitoring a physical sidelink shared channel (physical sidelink shared channel, PSSCH), to check whether there is information from transmit user equipment (TX UE).

However, on the sidelink, the RX UE does not keep exchanging valid information with the TX UE and does not keep performing uploading or downloading services, and data is not continuously transmitted during communication. In this case, when there is no data exchange between the receive UE and the transmit UE, if the RX UE still continuously monitors the PSSCH, power consumption of the RX UE may be increased.

### SUMMARY

This application provides a communication method and device, to reduce power consumption of RX UE.

According to a first aspect, this application provides a communication method. The method may be applied to a sidelink communication system, for example, an internet of vehicles system. The system may include a first communication device and a second communication device. The second communication device may be used as a transmit device (that is, TX UE), and the first communication device may be used as a receive device (that is, RX UE). In this case, when there is no reserved resource used to retransmit first transmission on a sidelink, a first communication device starts a first timer, and/or stops a second timer; or when there is a reserved resource used to retransmit the first transmission on a sidelink, and/or when a resource used to transmit the first transmission is a first resource in at least one resource corresponding to the first transmission, a first communication device stops a second timer.

In this application, the first transmission (transmission) may be a transmission block (transform block, TB), a medium access control packet data unit (medium access control packet data unit, MAC PDU), or the like.

When selecting a resource for the first transmission, the second communication device may select at least one resource (for example, one to three resources) for the first transmission. These resources may be used to initially transmit the first transmission, or may be used to retransmit the first transmission. The second communication device may transmit (initially transmit or retransmit), on a resource in the at least one resource, the first transmission to the first communication device. In this case, in time domain, another resource that is in the at least one resource and that follows the resource used to transmit the first transmission is a reserved resource corresponding to the first transmission.

In this embodiment of this application, the first timer indicates duration before a retransmission grant is received. For example, the first timer indicates minimum duration before a communication device receives the retransmission grant, and this may be understood as a minimum value of duration in which the communication device expects to wait before receiving the retransmission grant. The second timer indicates duration of receiving retransmission. For example, the second timer indicates maximum duration in which the communication device receives the retransmission, and this may be understood as a maximum value of a monitored duration in which the communication device expects to receive the retransmission.

Based on the first aspect, in some possible implementations, the first timer and the second timer correspond to a HARQ process corresponding to the first transmission.

In this application, when the first communication device determines that there is no reserved resource used to retransmit the first transmission (or a resource currently used to transmit the first transmission is the last resource in the at least one resource), the first communication device starts the first timer and/or stops the second timer. In this case, the first communication device does not need to monitor SCI that is associated with the HARQ process corresponding to the first transmission, and this reduces power consumption. Alternatively, when the first communication device determines that there is a reserved resource that is used to retransmit and that is in the at least one reserved resource, or a resource used to currently transmit the first transmission is a first reserved resource in the at least one reserved resource, the first communication device stops the second timer. In this case, the first communication device stops monitoring a physical sidelink control channel (physical sidelink control channel, PSCCH) and/or a PSSCH, and this reduces the power consumption.

Based on the first aspect, in some possible implementations, that a first communication device starts a first timer includes: The first communication device starts the first timer after sending, to a second communication device, hybrid automatic retransmission request (hybrid automatic retransmission request, HARQ) feedback corresponding to the first transmission on the sidelink; or the first communication device starts the first timer on a first symbol after sending the HARQ feedback, or the first communication device starts the first timer after receiving the first transmission.

In this application, after the second communication device sends the first transmission to the first communication device, the first communication device feeds back, to the second communication device, HARQ for the first transmission. In other words, the first communication device sends, to the second communication device, the HARQ feedback corresponding to the first transmission (that is, the first transmission is associated with the HARQ process). In this case, the first communication device starts the first timer after sending the HARQ feedback, or the first communication device starts the first timer on the first symbol after sending the HARQ feedback. In this case, the first communication device does not need to monitor the SCI that is associated with the HARQ process corresponding to the first transmission, and this reduces the power consumption.

Based on the first aspect, in some possible implementations, that a first communication device stops a second timer includes: The first communication device stops the second timer after sending, to the second communication device, the HARQ feedback corresponding to the first transmission on the sidelink; or the first communication device stops the second timer on the first symbol after sending the HARQ feedback.

In this application, after the second communication device sends the first transmission to the first communication device, the first communication device feeds back, to the second communication device, HARQ for the first transmission. In other words, the first communication device sends, to the second communication device, the HARQ feedback corresponding to the first transmission. In this case, the first communication device stops the second timer after sending the HARQ feedback. In this case, the first communication device does not need to monitor the SCI that is associated with the HARQ process corresponding to the first transmission, and this reduces the power consumption.

Based on the first aspect, in some possible implementations, the method further includes: When the first timer expires, and/or the first communication device fails to decode first transmission that is sent by the second communication device, the first communication device starts the second timer, starts to monitor the PSCCH and/or the PSSCH, and waits for retransmitting the first transmission.

Based on the first aspect, in some possible implementations, duration of the first timer of the first communication device is the same as that of a first timer of the second communication device, and duration of the second timer of the first communication device is the same as that of a second timer of the second communication device; or duration of a first timer of the second communication device is n symbols longer than that of the first timer of the first communication device, duration of a second timer of the first communication device is the same as that of the second timer of the second communication device, and n is a positive integer.

Based on the first aspect, in some possible implementations, before that a first communication device starts a first timer, the method further includes: The first communication device determines that an attribute of the HARQ feedback corresponding to the first transmission is enabled.

In this application, the attribute of the HARQ feedback corresponding to the first transmission means that when configuring a logic channel (logic channel, LCH) for the first communication device, a network side device, the first communication device, or the second communication device configures an attribute of the HARQ feedback for an LCH. The attribute of the HARQ feedback indicates whether the LCH supports and/or enables the HARQ feedback. Only LCHs with the same attribute of the HARQ feedback can be encapsulated in one transmission. In this case, the attribute of the HARQ feedback corresponding to the first transmission is an attribute of HARQ feedback of an LCH encapsulated in the first transmission. Alternatively, the attribute of the HARQ feedback corresponding to the first transmission means that when configuring a radio bearer (radio bearer) for the first communication device, a network side device, the first communication device, or the second communication device configures an attribute of the HARQ feedback for each radio bearer. The attribute of the HARQ feedback indicates whether the radio bearer supports and/or enables the HARQ feedback. In this case, the attribute of the HARQ feedback corresponding to the first transmission is an attribute of the HARQ feedback of the radio bearer corresponding to the first transmission.

Based on the first aspect, in some possible implementations, the method further includes: The first communication device receives first control information from the second communication device; the first communication device determines, based on the first control information, that there is the reserved resource used to retransmit the first transmission, and/or that the resource used to transmit the first transmission is the first resource in the at least one resource corresponding to the first transmission; or the first communication device determines, based on the first control information, that there is no reserved resource used to retransmit the first transmission, and/or that the resource used to transmit the first transmission is not the first resource in the at least one resource corresponding to the first transmission.

In this application, the first control information may be sidelink control information (sidelink control information, SCI).

According to a second aspect, this application provides a communication method. The method may be applied to a sidelink communication system, for example, an internet of vehicles system. The system may include a first communication device and a second communication device. The second communication device may be used as a transmit device (that is, TX UE), and the first communication device may be used as a receive device (that is, RX UE). In this case, when there is no reserved resource used to retransmit first transmission on a sidelink, a second communication device starts a first timer, and/or stops a second timer, where the first timer indicates duration before a retransmission grant is sent, and the second timer indicates duration of sending retransmission. Alternatively, when there is a reserved resource used to retransmit first transmission on a sidelink, and/or when a resource used to transmit the first transmission is a first resource in at least one resource corresponding to the first transmission, a second communication device stops a second timer, where the at least one reserved resource corresponding to the first transmission is obtained by selecting a resource for the first transmission.

In this application, the first timer and the second timer that are disposed on two sides of the first communication device and the second communication device are symmetrical. When the first communication device starts the first timer, the second communication device simultaneously starts the first timer. When the first communication device starts or stops the second timer, the second communication device simultaneously starts or stops the second timer.

Based on the second aspect, in some possible implementations, the first timer and the second timer correspond to a HARQ process corresponding to the first transmission.

Based on the second aspect, in some possible implementations, the method further includes: When the first timer expires, the second communication device starts the second timer.

Based on the second aspect, in some possible implementations, that a second communication device starts a first timer includes: The second communication device starts the first timer after receiving hybrid automatic retransmission request HARQ feedback that is sent by a first communication device; or the second communication device starts the first timer after sending the first transmission and delaying m symbols, where m is a positive integer; or the second communication device starts the first timer after sending the first transmission.

Based on the second aspect, in some possible implementations, a second communication device stops a second timer includes: The second communication device stops the second timer after sending, to the first communication device, the first transmission on the sidelink.

Based on the second aspect, in some possible implementations, duration of the first timer of the second communication device is the same as that of a first timer of the first communication device, and duration of the second timer of the first communication device is the same as that of a second timer of the first communication device; or duration of the first timer of the second communication device is n symbols longer than that of a first timer of the first communication device, duration of the second timer of the first communication device is the same as that of a second timer of the first communication device, and n is a positive integer.

Based on the second aspect, in some possible implementations, before a second communication device starts a first timer, the method further includes: The second communication device determines that an attribute of the HARQ feedback corresponding to the first transmission is enabled.

According to a third aspect, this application provides a communication method. The method may be applied to a sidelink communication system, for example, an internet of vehicles system. The system may include a third communication device and a fourth communication device. The fourth communication device may be used as a transmit device (that is, TX UE), and the third communication device may be used as a receive device (that is, RX UE). In this case, when there is at least one reserved resource used to retransmit second transmission on a sidelink, a third communication device configures duration of a third timer as first duration, and/or a third communication device configures duration of a fourth timer as second duration; or when there is no at least one reserved resource used to retransmit second transmission on a sidelink, a third communication device configures duration of a third timer as third duration, and/or a third communication device configures duration of a fourth timer as fourth duration.

The third timer indicates duration before a retransmission grant is received, and the fourth timer indicates duration of receiving retransmission.

Optionally, the third communication device determines the first duration based on a time domain gap between a first resource and a second resource in the at least one reserved resource, and/or the third communication device determines the fourth duration based on a time difference between time at which the third communication device receives the second transmission and time at which the third communication device determines to feed back acknowledgment information, where the first resource is used to transmit the second transmission, and the second resource is a resource that is in the at least one reserved resource and is closest to a first resource in time domain.

In this application, the second transmission may be a TB, a MAC PDU, or the like.

Optionally, the third duration is configured duration, and/or the fourth duration is configured duration.

Based on the third aspect, in some possible implementations, the first duration is gap-k, the gap is the time domain gap, and k is the time difference between the time at which the third communication device receives the second transmission from a fourth communication device and the time at which the third communication device determines to feed back the acknowledgment information.

Based on the third aspect, in some possible implementations, k is 2 or 3.

Based on the third aspect, in some possible implementations, after a third communication device configures duration of a third timer as first duration, or a third communication device configures duration of a third timer as third duration, the method further includes: The third communication device starts the third timer, and/or stops the fourth timer.

Based on the third aspect, in some possible implementations, the second duration is k+s or k-1+s symbols, k is the time difference, and s is a quantity of symbols included in one slot.

Based on the third aspect, in some possible implementations, the method further includes: When the third timer expires, and/or the third communication device fails to decode second transmission that is sent by the fourth communication device, the third communication device starts the fourth timer.

Based on the third aspect, in some possible implementations, after the third communication device determines the third duration as configured duration, and/or the fourth duration determines as configured duration, the method further includes: The third communication device starts the third timer, and/or stops the fourth timer.

Based on the third aspect, in some possible implementations, before the third communication device configures duration of a third timer based on a time domain gap between a first reserved resource and a second reserved resource in the plurality of reserved resources, the method further includes: The third communication device determines that an attribute of the HARQ feedback corresponding to the second transmission is enabled.

Based on the third aspect, in some possible implementations, the third timer and the fourth timer correspond to a HARQ process corresponding to the second transmission.

Based on the third aspect, in some possible implementations, the method further includes: The third communication device determines, based on second control information received from the fourth communication device, whether there is the at least one reserved resource used to retransmit the second transmission on the sidelink.

According to a fourth aspect, this application provides a communication method. The method may be applied to a sidelink communication system, for example, an internet of vehicles system. The system may include a third communication device and a fourth communication device. The fourth communication device may be used as a transmit device (that is, TX UE), and the third communication device may be used as a receive device (that is, RX UE). In this case, when there are a plurality of reserved resources used to transmit second transmission on a sidelink, the fourth communication device configures duration of a third timer as first duration, and/or configures duration of a fourth timer as second duration; or when there is no at least one reserved resource used to retransmit second transmission on the sidelink, the fourth communication device configures duration of a third timer as third duration, and/or configures duration of a fourth timer as fourth duration.

The third timer indicates duration before a retransmission grant is sent, and the fourth timer indicates duration of sending retransmission.

Optionally, the fourth communication device determines the first duration based on a time domain gap between a first resource and a second resource in the at least one reserved resource, and/or the fourth communication device determines the fourth duration based on a time difference between the time at which the third communication device receives the second transmission and the time at which the third communication device determines to feed back acknowledgment information, where the first resource is used to transmit the second transmission, and the second resource is a resource that is in the at least one reserved resource and that is closest to the first resource in time domain.

In this application, the second transmission may be a TB, a MAC PDU, or the like.

Optionally, the third duration is configured duration, and/or the fourth duration is configured duration.

Based on the fourth aspect, in some possible implementations, the first duration is gap-k, the gap is the time domain gap, and k is the time difference between the time at which the third communication device receives the second transmission from the fourth communication device and the time at which the third communication device determines to feed back the acknowledgment information.

Based on the fourth aspect, in some possible implementations, k is 2 or 3.

Based on the fourth aspect, in some possible implementations, the second duration is k+s or k-1+s symbols, k is the time difference, and s is a quantity of symbols included in one slot.

Based on the fourth aspect, in some possible implementations, after the fourth communication device configures the duration of the third timer as the first duration, or the fourth communication device configures the duration of the third timer as the third duration, the method further includes: After receiving HARQ feedback from the third communication device, the fourth communication device starts the third timer, and/or stops the fourth timer.

Based on the fourth aspect, in some possible implementations, the method further includes: When the third timer expires, the fourth communication device starts the fourth timer.

Based on the fourth aspect, in some possible implementations, after the fourth communication device configures the duration of the third timer as the third duration, or the fourth communication device configures the duration of the fourth timer as the fourth duration, the method further includes: After receiving the HARQ feedback from the third communication device, the fourth communication device starts the third timer, and/or stops the fourth timer.

Based on the fourth aspect, in some possible implementations, that the fourth communication device starts the third timer after receiving the HARQ feedback from the third communication device includes: The fourth communication device starts the third timer on a first symbol after receiving the HARQ feedback.

Based on the fourth aspect, in some possible implementations, before the fourth communication device configures the duration of the third timer based on the time domain gap between a first reserved resource and a second reserved resource in the plurality of reserved resources, the method further includes: The fourth communication device determines that an attribute of HARQ feedback corresponding to the second transmission is enabled.

Based on the fourth aspect, in some possible implementations, the third timer and the fourth timer correspond to a HARQ process corresponding to the second transmission.

Based on the fourth aspect, in some possible implementations, the method further includes: The fourth communication device sends second control information to the third communication device, where the second control information indicates whether there is the at least one reserved resource used to retransmit the second transmission on the sidelink.

According to a fifth aspect, this application provides a communication method. The method may be applied to a sidelink communication system, for example, an internet of vehicles system. The system may include a fifth communication device and a sixth communication device. The sixth communication device may be used as a transmit device (that is, TX UE), and the fifth communication device may be used as a receive device (that is, RX UE). When an attribute of hybrid automatic retransmission request HARQ feedback that corresponds to third transmission and that is sent on a sidelink is disabled, and/or the fifth communication device fails to decode the third transmission, the fifth communication device starts a fifth timer, where the fifth timer indicates duration before a retransmission grant is received.

In this application, when the attribute of the hybrid automatic retransmission request HARQ feedback that corresponds to the third transmission and that is sent on the sidelink is disabled, the fifth communication device may start the fifth timer. Alternatively, when the attribute of the hybrid automatic retransmission request HARQ feedback that corresponds to the third transmission and that is sent on the sidelink is disabled and the fifth communication device fails to decode the third transmission, the fifth communication device may start the fifth timer.

In this application, the third transmission may be a TB, a MAC PDU, or the like.

Based on the fifth aspect, in some possible implementations, the method further includes: When the fifth timer expires, the fifth communication device starts a sixth timer, where the sixth timer indicates duration of receiving retransmission.

Based on the fifth aspect, in some possible implementations, the method further includes: When the attribute of the HARQ feedback corresponding to the third transmission is disabled, the fifth communication device determines that the sixth communication device performs blind retransmission for the third transmission.

Based on the fifth aspect, in some possible implementations, that the fifth communication device determines that the sixth communication device performs blind retransmission for the third transmission includes: the fifth communication device determines, based on a received third control information, that the sixth communication device performs the blind retransmission for the third transmission, where the third control information is control information that corresponds to the third transmission and that is sent by the sixth communication device on the sidelink.

According to a sixth aspect, this application provides a communication method. The method may be applied to a sidelink communication system, for example, an internet of vehicles system. The system may include a fifth communication device and a sixth communication device. The sixth communication device may be used as a transmit device (that is, TX UE), and the fifth communication device may be used as a receive device (that is, RX UE). When an attribute of hybrid automatic retransmission request HARQ feedback corresponding to third transmission that is sent on a sidelink is disabled, the sixth communication device starts a fifth timer after sending the third transmission to the fifth communication device and delaying h symbols, where the fifth timer indicates duration before a retransmission grant is sent.

In this application, the third transmission may be a TB, a MAC PDU, or the like.

Based on the sixth aspect, in some possible implementations, the method further includes: When the fifth timer expires, the sixth communication device starts a sixth timer, where the sixth timer indicates duration of sending retransmission.

Based on the sixth aspect, in some possible implementations, the method further includes: When the attribute of the HARQ feedback corresponding to the third transmission is disabled, the sixth communication device determines to perform blind retransmission for the third transmission.

According to a seventh aspect, this application provides a communication apparatus. The communication apparatus may be a chip or a system on chip in a first communication device, or may be a function module that disposed is in the first communication device and configured to implement the method in any one of the first aspect or the possible implementations of the first aspect. The communication apparatus may include a processing module, configured to: when there is no reserved resource used to retransmit first transmission on a sidelink, start a first timer, and/or stop a second timer; or when there is a reserved resource used to retransmit first transmission on a sidelink, and/or when a resource used to transmit the first transmission is a first resource in at least one resource corresponding to the first transmission, stop a second timer.

When selecting a resource for the first transmission, a second communication device may select at least one resource (for example, one to three resources) for the first transmission. These resources may be used to initially transmit the first transmission, or may be used to retransmit the first transmission. The second communication device may transmit (initially transmit or retransmit), on a resource in the at least one resource, the first transmission to the first communication device. In this case, in time domain, another resource that follows the resource used to transmit the first transmission is a reserved resource corresponding to the first transmission.

The first timer indicates duration before a retransmission grant is received, and the second timer indicates duration of receiving retransmission.

Based on the seventh aspect, in some possible implementations, the apparatus may further include: a sending module, configured to send, to the second communication device, HARQ feedback corresponding to the first transmission on the sidelink; a receiving module, configured to receive first transmission that is sent by the second communication device; and correspondingly, a processing module, configured to: start the first timer after the sending module sends the HARQ feedback corresponding to the first transmission, start the first timer on a first symbol after the sending module sends the HARQ feedback, or start the first timer after the receiving module receives the first transmission.

Based on the seventh aspect, in some possible implementations, the sending module is configured to send, to the second communication device, the HARQ feedback corresponding to the first transmission on the sidelink. The processing module is further configured to: stop the second timer after the sending module sends the HARQ feedback corresponding to the first transmission, or stop the second timer on the first symbol after the sending module sends the HARQ feedback.

Based on the seventh aspect, in some possible implementations, the processing module is further configured to: when the first timer expires, and/or the first transmission that is sent by the second communication device is not successfully decoded, start the second timer.

Based on the seventh aspect, in some possible implementations, the processing module is further configured to: before the first timer is started, determine that an attribute of the HARQ feedback corresponding to the first transmission is enabled.

Based on the seventh aspect, in some possible implementations, the receiving module is configured to receive first control information from the second communication device. The processing module is configured to determine, based on the first control information, whether there is the reserved resource used to retransmit the first transmission, and/or whether the resource used to transmit the first transmission is not the first resource in the at least one resource corresponding to the first transmission.

According to an eighth aspect, this application provides a communication apparatus. The communication apparatus may be a chip or a system on chip in a second communication device, or may be a function module that disposed is in the second communication device and configured to implement the method in any one of the second aspect or the possible implementations of the second aspect. The communication apparatus may include a processing module, configured to: when there is no reserved resource used to retransmit first transmission on a sidelink, start a first timer, and/or stop a second timer, where the first timer indicates duration before a retransmission grant is sent, and the second timer indicates duration of sending retransmission; or when there is a reserved resource used to retransmit first transmission on a sidelink, and/or the resource used to transmit first transmission is a first resource in at least one resource corresponding to the first transmission, stop the second timer, where the at least one reserved resource corresponding to the first transmission is obtained by selecting a resource for the first transmission.

Based on the eighth aspect, in some possible implementations, the processing module is further configured to: when the first timer expires, start the second timer.

Based on the eighth aspect, in some possible implementations, the apparatus further includes: a receiving module and a sending module, where the receiving module is configured to receive HARQ feedback that corresponds to second transmission and that is sent by a first communication device; and a processing module, configured to start the first timer after the receiving module receives the HARQ feedback. Alternatively, the apparatus includes: a sending module, configured to send, to the first communication device, the first transmission on the sidelink; and a processing module, configured to: start the first timer after the sending module sends the first transmission and delays by m symbols, where m is a positive integer; or start the first timer after the sending module sends the first transmission.

Based on the eighth aspect, in some possible implementations, the apparatus further includes: a sending module, configured to send, to the first communication device, the first transmission on the sidelink; and a processing module, configured to stop the second timer after the sending module sends the first transmission.

Based on the eighth aspect, in some possible implementations, the processing module is further configured to: before the first timer is started, determine that an attribute of HARQ feedback corresponding to the first transmission is enabled.

According to a ninth aspect, this application provides a communication apparatus. The communication apparatus may be a chip or a system on chip in a third communication device, or may be a function module that disposed is in the third communication device and configured to implement the method in any one of the third aspect or the possible implementations of the third aspect. The communication apparatus may include a processing module, configured to: when there is at least one reserved resource used to retransmit second transmission on a sidelink, configure duration of a third timer as first duration, and/or configure duration of a fourth timer as second duration, or when there is no at least one reserved resource used to retransmit second transmission on a sidelink, a third communication device configures duration of a third timer as third duration, and/or configures duration of a fourth timer as fourth duration.

The third timer indicates duration before a retransmission grant is received, and the fourth timer indicates duration of receiving retransmission.

Optionally, the processing module is configured to determine the first duration based on a time domain gap between a first resource and a second resource in the at least one reserved resource, and/or the processing module is configured to determine the second duration based on a time difference between time at which the third communication device receives the second transmission and time at which the third communication device determines to feed back acknowledgment information, where the first resource is used to transmit the second transmission, and the second resource is a resource that is in the at least one reserved resource and is closest to a first resource in time domain.

In this application, the second transmission may be a TB, a MAC PDU, or the like.

Optionally, the third duration is configured duration, and/or the fourth duration is configured duration.

Based on the ninth aspect, in some possible implementations, the first duration is gap-k, the gap is the time domain gap, and k is the time difference between the time at which the third communication device receives the second transmission from a fourth communication device and the time at which the third communication device determines to feed back the acknowledgment information.

Based on the ninth aspect, in some possible implementations, k is 2 or 3.

Based on the ninth aspect, in some possible implementations, the processing module is further configured to: after configuring the duration of the third timer as the third duration, and/or configuring the duration of the fourth timer as the fourth duration, start the third timer, and/or stop the fourth timer.

Based on the ninth aspect, in some possible implementations, the second duration is k+s or k-1+s symbols, k is the time difference, and s is a quantity of symbols included in one slot.

Based on the ninth aspect, in some possible implementations, the processing module is further configured to: after configuring the duration of the fourth timer as the second duration, and/or configuring the duration of the fourth timer as the fourth duration, start the fourth timer.

Based on the ninth aspect, in some possible implementations, the processing module is further configured to: when the third timer expires, and/or the second transmission is not successfully decoded, start the fourth timer.

Based on the ninth aspect, in some possible implementations, the processing module is configured to: after determining the third duration as the configured duration, and/or determining the fourth duration as configured duration, start the third timer, and/or stop the fourth timer.

Based on the ninth aspect, in some possible implementations, the sending module is configured to send, to the fourth communication device, HARQ feedback corresponding to the second transmission on the sidelink. The processing module is further configured to: start the third timer after the sending module sends the HARQ feedback corresponding to the second transmission.

Based on the ninth aspect, in some possible implementations, the processing module is further configured to start the third timer on a first symbol after the sending module sends the HARQ feedback corresponding to the second transmission.

Based on the ninth aspect, in some possible implementations, the processing module is further configured to: before configuring the duration of the third timer, determine that an attribute of the HARQ feedback corresponding to the second transmission is enabled.

Based on the ninth aspect, in some possible implementations, the apparatus further includes: a receiving module, configured to receive second control information from the fourth communication device; and a processing module, configured to determine, based on the second control information, whether there is the at least one reserved resource used to retransmit the second transmission on the sidelink.

According to a tenth aspect, this application provides a communication apparatus. The communication apparatus may be a chip or a system on chip in a fourth communication device, or may be a function module that is disposed in the fourth communication device and configured to implement the method in any one of the fourth aspect or the possible implementations of the fourth aspect. The communication apparatus may include: a sending module, configured to transmit second transmission on a sidelink; and a processing module, configured to: when there are a plurality of reserved resources used to transmit the second transmission on the sidelink, configure duration of a third timer as first duration, and/or configure duration of a fourth timer as second duration, or a processing module, configured to: when there is no at least one reserved resource used to retransmit the second transmission on the sidelink, configure duration of a third timer as third duration, and/or configure duration of a fourth timer as fourth duration.

The third timer indicates duration before a retransmission grant is sent, and the fourth timer indicates duration of sending retransmission.

Optionally, the processing module is configured to determine the first duration based on a time domain gap between a first resource and a second resource in the at least one reserved resource, and/or the processing module is configured to determine the second duration based on a time difference between time at which a third communication device receives the second transmission and time at which the third communication device determines to feed back acknowledgment information, where the first resource is used to transmit the second transmission, and the second resource is a resource that is in the at least one reserved resource and is closest to a first resource in time domain.

In this application, the second transmission may be a TB, a MAC PDU, or the like.

Optionally, the third duration is configured duration, and/or the fourth duration is configured duration.

Based on the tenth aspect, in some possible implementations, the first duration is gap-k, the gap is the time domain gap, and k is the time difference between the time at which the third communication device receives the second transmission from the fourth communication device and the time at which the third communication device determines to feed back the acknowledgment information.

Based on the tenth aspect, in some possible implementations, k is 2 or 3.

Based on the tenth aspect, in some possible implementations, the second duration is k+s or k-1+s symbols, k is the time difference, and s is a quantity of symbols included in one slot.

Based on the tenth aspect, in some possible implementations, the apparatus further includes: a receiving module, configured to receive HARQ feedback that corresponds to the second transmission and that is sent by the third communication device; and a processing module, further configured to: when there is the reserved resource used to retransmit the second transmission on the sidelink, after the receiving module receives the HARQ feedback, start the third timer, and/or stop the fourth timer.

Based on the tenth aspect, in some possible implementations, the processing module is further configured to: when the third timer expires, start the fourth timer.

Based on the tenth aspect, in some possible implementations, the receiving module is configured to receive the HARQ feedback that corresponds to the second transmission and that is sent by the third communication device; and the processing module is further configured to: after configuring the duration of the third timer to the third duration, and/or configuring the duration of the fourth timer to the fourth duration, and receiving the HARQ feedback corresponding to the second transmission from the third communication device, start the third timer, and/or stop the fourth timer.

Based on the tenth aspect, in some possible implementations, the processing module is configured to start the third timer in a first symbol after the receiving module receives the HARQ feedback corresponding to the second transmission.

Based on the tenth aspect, in some possible implementations, the processing module is further configured to: before configuring the duration of the third timer, determine that an attribute of the HARQ feedback corresponding to the second transmission is enabled.

Based on the tenth aspect, in some possible implementations, the sending module is further configured to send second control information to the third communication device, where the second control information indicates whether there is the at least one reserved resource used to retransmit the second transmission on the sidelink.

According to an eleventh aspect, this application provides a communication apparatus. The communication apparatus may be a chip or a system on chip in a fifth communication device, or may be a function module that is disposed in the fifth communication device and configured to implement the method in any one of the fifth aspect or the possible implementations of the fifth aspect. The communication apparatus may include: a receiving module, configured to receive third transmission that is sent by a sixth communication device on a sidelink; and a processing module, configured to: when an attribute of HARQ feedback corresponding to the third transmission is disabled, and/or the third transmission is not successfully decoded, start a fifth timer, where the fifth timer indicates duration before a retransmission grant is received.

Based on the eleventh aspect, in some possible implementations, the processing module is configured to: when the fifth timer expires, start a sixth timer, where the sixth timer indicates duration of receiving retransmission.

Based on the eleventh aspect, in some possible implementations, the processing module is configured to: when the attribute of the HARQ feedback corresponding to the third transmission is disabled, determine that the sixth communication device performs blind retransmission for the third transmission.

Based on the eleventh aspect, in some possible implementations, the receiving module is configured to receive third control information that is sent by the sixth communication device; and the processing module is configured to determine, based on the received third control information, that the sixth communication device performs the blind retransmission for the third transmission, where the third control information is control information that corresponds to the third transmission and that is sent by the sixth communication device on the sidelink.

According to a twelfth aspect, this application provides a communication apparatus. The communication apparatus may be a chip or a system on chip in a sixth communication device, or may be a function module that is disposed in the sixth communication device and configured to implement the method in any one of the sixth aspect or the possible implementations of the sixth aspect. The communication apparatus may include: a sending module, configured to send third transmission to a fifth communication device on a sidelink; and a processing module, configured to: when an attribute of HARQ feedback corresponding to the third transmission is disabled, after sending the third transmission to the fifth communication device and delaying h symbols, start a fifth timer, where the fifth timer indicates duration before a retransmission grant is sent.

Based on the twelfth aspect, in some possible implementations, the processing module is further configured to: when the fifth timer expires, the sixth communication device starts a sixth timer, where the sixth timer indicates duration of sending retransmission.

Based on the twelfth aspect, in some possible implementations, the processing module is further configured to: when the attribute of the HARQ feedback corresponding to the third transmission is disabled, determine to perform blind retransmission for the third transmission.

According to a thirteenth aspect, this application provides a communication apparatus. The communication apparatus includes a processor, a memory, and a communication interface, where the processor is coupled to the memory, the processor is configured to read and execute instructions in the memory, to implement the communication method according to any one of the first aspect, the third aspect, the fifth aspect, and the possible implementations thereof, and the communication interface is configured to communicate with a second communication device, a fourth communication device, or a sixth communication device.

According to a fourteenth aspect, this application provides a communication apparatus. The communication apparatus includes a processor, a memory, and a communication interface, where the processor is coupled to the memory, the processor is configured to read and execute instructions in the memory, to implement the communication method according to any one of the second aspect, the fourth aspect, the sixth aspect, and the possible implementations thereof, and the communication interface is configured to communicate with a first communication device, a third communication device, or a fifth communication device.

According to a fifteenth aspect, this application provides a computer-readable storage medium. The computer-readable storage medium stores instructions, and when the instructions run on a computer, the computer performs the communication method in any one of the first aspect to the sixth aspect, and the possible implementations thereof.

According to a sixteenth aspect, this application provides a computer program or a computer program product. When the computer program or the computer program product is executed on a computer, the computer is enabled to implement any communication method in any one of the first aspect to the sixth aspect, and the possible implementations thereof.

It should be understood that technical solutions of the seventh to the sixteenth aspects of this application are consistent with technical solutions of the first aspect or the sixth aspect of this application, and advantageous effects achieved by the aspects and the corresponding feasible implementations are similar. Details are not described again.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a schematic diagram of an architecture of a communication system according to an embodiment of this application;
FIG. 2 is a schematic diagram of another architecture according to an embodiment of this application;
FIG. 3 is a schematic diagram of at least one resource corresponding to one transmission according to an embodiment of this application;
FIG. 4 is a schematic flowchart of a communication method on a first communication device side according to an embodiment of this application;
FIG. 5 is a schematic flowchart of a communication method on a second communication device side according to an embodiment of this application;
FIG. 6 is a schematic flowchart of a communication method on a third communication device side according to an embodiment of this application;
FIG. 7 is a schematic flowchart of a communication method on a fourth communication device side according to an embodiment of this application;
FIG. 8 is a schematic flowchart of a communication method on a fifth communication device side according to an embodiment of this application;
FIG. 9 is a schematic flowchart of a communication method on a sixth communication device side according to an embodiment of this application;
FIG. 10 is a schematic diagram of a structure of a communication apparatus according to an embodiment of this application; and
FIG. 11 is a schematic diagram of another structure of a communication apparatus according to an embodiment of this application.

### DESCRIPTION OF EMBODIMENTS

The following describes embodiments of this application with reference to the accompanying drawings in embodiments of this application. In the following description, reference is made to the accompanying drawings that form a part of this application and show specific aspects of embodiments of this application in an illustrative manner or in which specific aspects of embodiments of this application may be used. It should be understood that embodiments of this application may be used in other aspects, and may include structural or logical changes not depicted in the accompanying drawings. For example, it should be understood that the disclosure with reference to the described method may also be applied to a corresponding device or system for performing the method, and vice versa. For example, if one or more specific method steps are described, a corresponding device may include one or more units such as functional units for performing the described one or more method steps (for example, one unit performs the one or more steps; or a plurality of units, each of which performs one or more of the plurality of steps), even if such one or more units are not explicitly described or illustrated in the accompanying drawings. In addition, for example, if a specific apparatus is described based on one or more units such as a functional unit, a corresponding method may include one step for implementing functionality of one or more units (for example, one step for implementing functionality of one or more units; or a plurality of steps, each of which is for implementing functionality of one or more units in a plurality of units), even if such one or more of steps are not explicitly described or illustrated in the accompanying drawings. Further, it should be understood that features of various example embodiments and/or aspects described in this specification may be combined with each other, unless otherwise specified.

A new radio (new radio, NR) technology is a current mainstream wireless communication technology. For a vehicle to everything (vehicle to everything, V2X) service feature and a new service requirement, the new radio technology can support V2X communication with a lower latency and higher reliability. However, on a sidelink (sidelink, SL), receive user equipment (RX UE) keeps listening to a PSCCH and/or a PSSCH to check whether there is information from transmit user equipment (TX UE). However, on the sidelink, the RX UE does not keep exchanging valid information with the TX UE and does not keep performing uploading or downloading services, and data is not continuously transmitted during communication. In this case, when there is no data exchange between the receive user equipment and the transmit user equipment (UEs), if the RX UE still continuously monitors the PPSCCH and/or the PSSCH, power consumption of the RX UE may be increased.

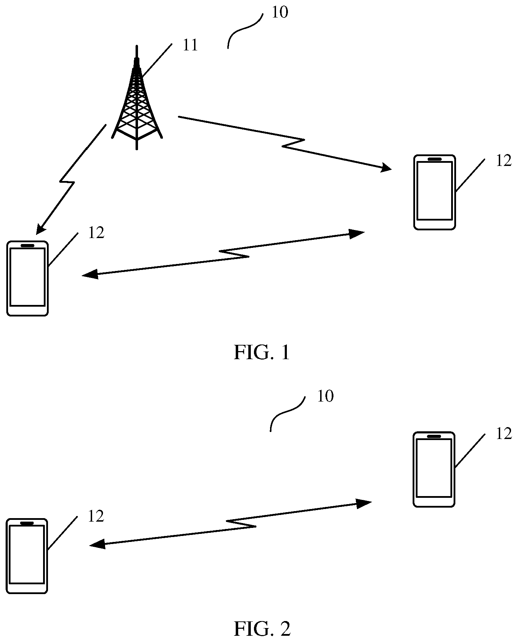

To resolve this problem, an embodiment of this application provides a communication system. The communication system may be a sidelink communication system. The sidelink communication system is applicable to a field such as vehicle to everything (vehicle to everything, V2X), smart internet of vehicles, or autonomous vehicles. FIG. 1 is a schematic diagram of an architecture of a communication system according to an embodiment of this application. As shown in FIG. 1, a communication system 10 may include a network side device 11 and a communication device 12. FIG. 2 is a schematic diagram of another architecture according to an embodiment of this application. As shown in FIG. 2, the communication system 10 may further include a plurality of communication devices 12. Certainly, in this embodiment of this application, a type and a quantity of network elements included in the communication system, and a connection relationship between network elements are not limited thereto.

In this embodiment of this application, when communicating with the network side device, the communication device may further communicate with another communication device. The network side device may perform resource configuration, scheduling, coordination, and the like on a sidelink used for the communication devices, to assist in direct communication between the communication devices. Alternatively, the communication device may perform resource configuration, scheduling, coordination, and the like on a side link for communication devices between other communication devices. This is not specifically limited in this embodiment of this application.

The network device may be a device that is on an access network side and that is configured to support a terminal in accessing a communication system, for example, may be a next generation Node B (next generation Node B, gNB) in a 5G access technology communication system, a transmission reception point (transmission reception point, TRP), a relay node (relay node), an access point (access point, AP), or a road site unit (road site unit, RSU).

The communication device may be a device that provides voice or data connectivity for a user. For example, the communication device also be referred to as user equipment (UE), a mobile station (mobile station), a subscriber unit (subscriber unit), a station (station), or terminal equipment (TE, Terminal Equipment). The communication device may be a cellular phone (cellular phone), a personal digital assistant (PDA, Personal Digital Assistant), a wireless modem (modem), a handheld (handheld) device, a laptop computer (laptop computer), a cordless phone (cordless phone), a wireless local loop (WLL, Wireless Local Loop) station, a tablet (pad), or the like. With development of wireless communication technologies, any device that can access a wireless communication system, communicate with a network side of a wireless communication system, or communicate with another device by using a wireless communication system may be the communication device in the embodiments of this application, such as a terminal, a vehicle, or an RSU in intelligent transportation, a household device in a smart household, an electricity meter reading instrument in a smart grid, a voltage monitoring instrument, an environment monitoring instrument, a video surveillance instrument in an intelligent security network, or a cash register. The communication device may be statically fixed or mobile.

The following describes the communication method provided in embodiments of this application with reference to the communication system.

In an NR SL, a network side device such as a base station configures a resource pool for SL communication of the UE. A resource pool is a set of one segment of time-frequency resources. A resource used by the UE to perform communication on the SL link is determined from a preconfigured resource pool or a resource pool configured on a base station side. Specifically, there are two modes in which the Tx UE obtains, from the network side device, the transmission resource used for communication on the SL link: a mode 1 and a mode 2. The preconfigured resource may be obtained from a network element of a core network, or may be preset in the UE.

In the mode 1, the base station allocates an SL transmission resource to the Tx UEs by scheduling. In this mode, when the Tx UE has SL to-be-transmitted data, the Tx UE reports an SL buffer status report (buffer status report, BSR) MAC CE to the base station by using a Uu interface, to notify the base station of an amount of the to-be-transmitted data of the Tx UE at a PC5 interface. The base station may dynamically allocate a transmission resource to the Tx UE.

In the mode 2, the UE selects, as required, a transmission resource from the preconfigured resource pool or the resource pool configured by the base station, without scheduling by the base station. An SL resource determined by the UE is configured by the base station (for example, configured by RRC signaling or by using a system information block (system information block, SIB)), or is preconfigured. The preconfigured resource herein may be obtained from the network element of the core network, or may be preset in the UE.

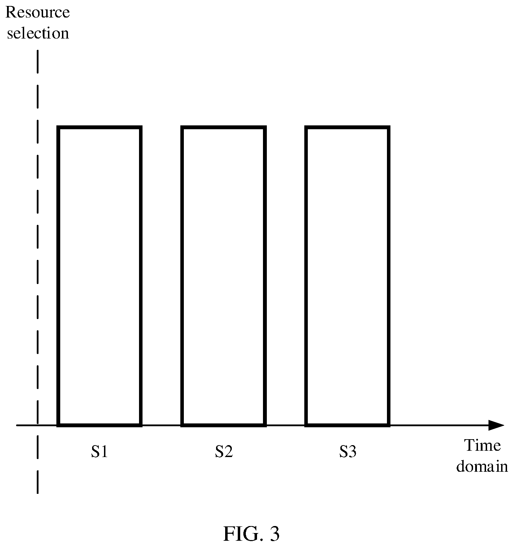

In the mode 2, the TX UE selects at least one resource (usually one to three resources) for one transmission, for example, one TB or one MAC PDU, once selecting a resource. The at least one resource is used for newly transmitting or retransmitting the transmission. The TX UE may select a resource in the at least one resource to send the transmission. In this case, a resource used to currently send the transmission is a current transmission resource. In time domain, a resource that follows the current transmission resource is a reserved resource, and the reserved resource is a resource reserved to retransmit the transmission. For example, FIG. 3 is a schematic diagram of at least one resource corresponding to one transmission according to an embodiment of this application. As shown in FIG. 3, the TX UE selects three resources for one transmission, that is, S1, S2, and S3. If the TX UE sends the transmission on S1, S1 is a current transmission resource, and S2 and S2 are two reserved resources corresponding to the transmission.

In this embodiment of this application, after a first communication device receives first transmission on a resource corresponding to the first transmission, the first communication device needs to determine whether there is a reserved resource used to retransmit the first transmission on a sidelink. In this case, the first communication device may perform the following steps.

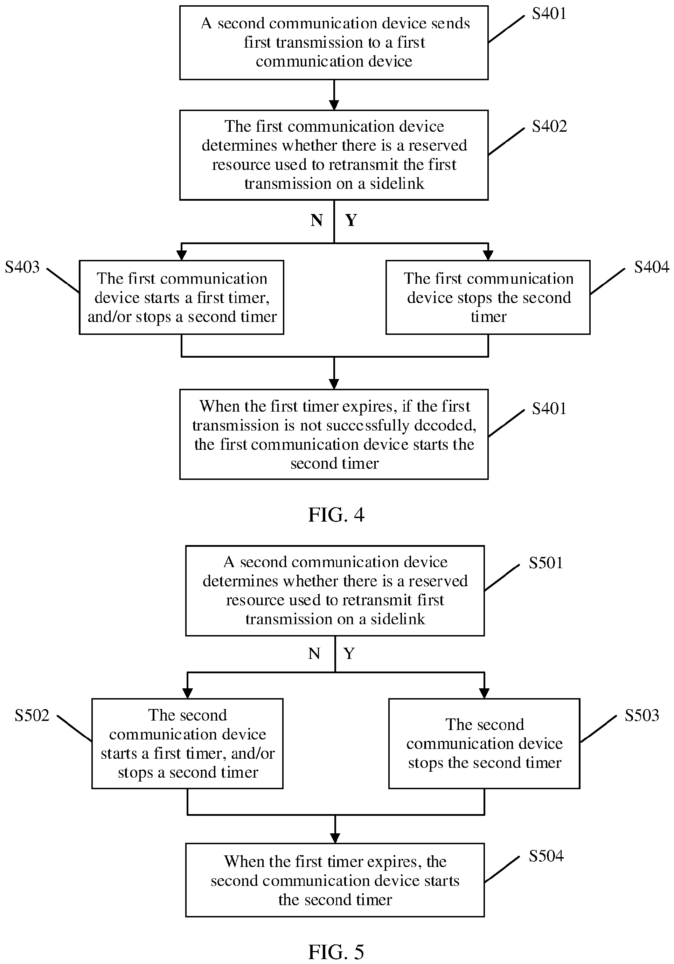

FIG. 4 is a schematic flowchart of a communication method on a first communication device side according to an embodiment of this application. As shown in FIG. 4, the method includes the following steps.

S401: A second communication device sends the first transmission to the first communication device.

The second communication device (TX UE) sends the first transmission on a first resource in the at least one resource selected for the first transmission. In this case, the second communication device may initially transmit the first transmission, or may retransmit the first transmission. The first transmission may be one TB or one MAC PDU, or certainly may be another transmission. This is not specifically limited in this embodiment of this application.

S402: The first communication device determines whether there is the reserved resource used to retransmit the first transmission on the sidelink. If there is no reserved resource used to retransmit the first transmission on the sidelink, the first communication device may perform step S403. If there is the reserved resource used to retransmit the first transmission on the sidelink, the first communication device may perform step S404.

After receiving (may be understood as just receiving or completing receiving) the first transmission on the first resource, the first communication device (RX UE) determines whether there is at least one reserved resource that is used to retransmit the first transmission and that follows the first resource, to be specific, the first communication device determines whether there is the reserved resource used to retransmit the first transmission on the sidelink. If there is the at least one reserved resource following the first resource, the first communication device may determine that there is the reserved resource used to retransmit the first transmission on the sidelink, and then perform the step S 104. If there is no at least one reserved resource following the first resource, the first communication device may determine that there is no reserved resource used to retransmit the first transmission on the sidelink, and then perform the step S103.

In this embodiment of this application, if the first transmission transmitted by the second communication device to the first communication device in the step S101 is the initially transmitted first transmission, the second communication device may further send first control information to the first communication device, where the first control information indicates a location of at least one resource corresponding to the first transmission. Therefore, after receiving the first control information, the first communication device may determine, based on an indication of the first control information, whether there is the at least one reserved resource following the first resource, to be specific, first communication device may determine whether there is the reserved resource used to retransmit the first transmission on the sidelink.

Optionally, the first control information may be SCI. In this case, the first communication device may determine, based on an indication of the SCI, whether there is the reserved resource used to retransmit the first transmission on the sidelink. Certainly, the first control information may alternatively be other information. This is not specifically limited in this embodiment of this application.

In this embodiment of this application, the first communication device may determine, by determining whether a resource used to receive the first transmission is the last resource in the at least one resource, whether there is the reserved resource used to retransmit the first transmission on the sidelink. For example, still as shown in FIG. 3, it is assumed that the first communication device receives the first transmission on S3, the first communication device may determine that S3 is the last resource in the three resources S1 to S3, and there is no resource used to retransmit the first transmission following S3, that is, there is no reserved resource used to retransmit the first transmission on the sidelink. If the first communication device does not receive the first transmission on the S3, it indicates that there is the reserved resource used to retransmit the first transmission on the sidelink. It can be learned that if the resource used to transmit the first transmission is the last resource in the at least one resource, it indicates that there is no reserved resource used to retransmit the first transmission on the sidelink. If the resource used to transmit the first transmission is not the last resource in the at least one resource, it indicates that there is the reserved resource used to retransmit the first transmission on the sidelink.

In some possible implementations, the first communication device may determine, by determining whether the resource used to receive the first transmission is the first resource in the at least one resource, whether there is the reserved resource used to retransmit the first transmission on the sidelink. For example, still as shown in FIG. 3, it is assumed that the first communication device receives the first transmission on S 1, the first communication device may determine that S1 is a first resource in the three resources S1 to S3, and there is the resource used to retransmit the first transmission, for example, S2 and S3, that is, there is the reserved resource used to retransmit the first transmission on the sidelink. If the first communication device does not receive the first transmission on S1, there is no reserved resource used to retransmit the first transmission on the sidelink. It can be learned that if the resource used to receive the first transmission is the first resource in the at least one resource, it indicates that there is the reserved resource used to retransmit the first transmission on the sidelink. If the resource used to receive the first transmission is not the first resource in the at least one resource, it indicates that there is no reserved resource used to retransmit the first transmission on the sidelink.

S403: The first communication device starts a first timer, and/or stops a second timer.

When the first communication device determines that there is no reserved resource used to retransmit the first transmission on the sidelink, and/or that the resource used to receive the first transmission is the last resource in the at least one resource, the first communication device starts the first timer. Optionally, the first communication device may further stop the second timer while starting the first timer, or may separately start the first timer and the second timer at different time points.

It should be noted that, in this embodiment of this application, "when..." merely indicates an execution condition of a step; and execution time of the step is not limited, and may also be understood as "if".

In some possible embodiments, the first timer described in this embodiment of this application indicates duration before a retransmission grant is received. For example, the first timer indicates minimum duration before a communication device receives the retransmission grant, and this may be understood as a minimum value of duration in which the communication device expects to wait before receiving the retransmission grant. The second timer indicates duration of receiving retransmission. For example, the second timer indicates maximum duration in which the communication device receives the retransmission, and this may be understood as a maximum value of duration in which the communication device expects to receive the retransmission. Optionally, the first timer and the second timer correspond to a HARQ process corresponding to the first transmission. In other words, based on the HARQ process corresponding to the first transmission, the first communication device starts the first timer, and/or stops the second timer.

In an actual application, to ensure that data is received and sent, when a transmit device and a receive device set the timers, duration of the timers may be consistent. To be specific, duration of a first timer of the first communication device is the same as that of a first timer of a second communication device, and duration of a second timer of the first communication device is the same as that of a second timer of the second communication device. Certainly, it is considered that the first communication device needs to parse the first transmission after receiving the first transmission, n symbols may be required. In this case, the duration of the first timer of the second communication device may be n symbols longer than the duration of the first timer of the first communication device, the duration of the second timer of the first communication device is the same as that of the second timer of the second communication device, and n is a positive integer. Certainly, the duration of the second timer of the second communication device may alternatively be n symbols longer than the duration of the second timer of the first communication device, the duration of the first timer of the first communication device is the same as that of the first timer of the second communication device, and n is a positive integer.

In an actual application, the first timer may be a drx-sl-HARQ-RTT-Timer, and the second timer may be a drx-sl-Retransmission-Timer. Certainly, the first timer and the second timer may alternatively be other timers. This is not specifically limited in this embodiment of this application.

S404: The first communication device stops the second timer.

When the first communication device determines that there is the reserved resource used to retransmit the first transmission on the sidelink, and/or that the resource used to receive the first transmission is the first resource in the at least one resource, the first communication device stops the second timer, and therefore the first communication device does not need to monitor SCI that is associated with the HARQ process corresponding to the first transmission. This reduces power consumption.

In this embodiment of this application, when performing the step S403, the first communication device may further first send, to the second communication device, HARQ feedback corresponding to the first transmission, that is, the HARQ feedback corresponding to the first transmission, and after sending the HARQ feedback, may start the first timer, and/or stop the second timer.

Optionally, the first communication device may immediately start, after sending the HARQ feedback, the first timer, and/or stop the second timer. Alternatively, the first communication device may start the first timer on a first symbol after sending the HARQ feedback. Certainly, the first communication device may alternatively start the timer on a q^{th} symbol after sending the HARQ feedback, where q is a positive integer. This is not specifically limited in this embodiment of this application.

In some possible implementations, the first communication device needs to send, to the second communication device, the HARQ feedback corresponding to the first transmission. In this case, the first communication device first needs to determine whether an attribute of the HARQ feedback corresponding to the first transmission is enabled (enable). The first communication device can give the HARQ feedback on the first transmission only when the attribute of the HARQ feedback corresponding to the first transmission is enabled.

In an actual application, when configuring an LCH for the first communication device, the network side device, the first communication device, or the second communication device configures the attribute of the HARQ feedback for the LCH. The attribute of the HARQ feedback indicates whether the LHC supports HARQ feedback. Only LCHs with the same attribute of the HARQ feedback can be encapsulated in one transmission. In this case, the attribute of the HARQ feedback corresponding to the first transmission is an attribute of HARQ feedback of an LCH encapsulated in the first transmission.

Further, after performing the step S403 or S404, the first communication device may further perform step S405: When the first timer expires, if the first transmission is not successfully decoded, the first communication device starts the second timer, monitors the SCI that is associated with the HARQ process corresponding to the first transmission, and waits for retransmitting the first transmission.

For the process, after the first communication device stops the second timer, the first communication device does not need to keep monitoring the SCI that is associated with the HARQ process corresponding to the first transmission, but to receive, based on a resource location indicated by the first control information, retransmission of the first transmission on a corresponding resource. This reduces the power consumption.

It is easy to understand that because the first communication device and the second communication device are symmetrical, for the process, the second communication device may further perform the following steps.

FIG. 5 is a schematic flowchart of a communication method on a second communication device side according to an embodiment of this application. As shown in FIG. 5, the method may include the following steps.

S501: A second communication device determines whether there is a reserved resource used to retransmit first transmission on a sidelink. If there is no reserved resource used to retransmit the first transmission on the sidelink, the second communication device may perform step S502. If there is the reserved resource used to retransmit the first transmission on the sidelink, the second communication device may perform step S503.

When the second communication device needs to send the first transmission to a first communication device, or has sent the first transmission to the first communication device, the second communication device determines, based on at least one resource selected or reselected by the second communication device for the first transmission, whether there is the reserved resource used to retransmit the first transmission on the sidelink. If there is no reserved resource used to retransmit the first transmission, the second communication device performs the step S502. If there is the reserved resource used to retransmit the first transmission, the second communication device performs the step S503.

Herein, for a specific execution process of the step S501, refer to the description of S402 in the foregoing embodiment. Details are not described herein again.

S502: The second communication device starts a first timer, and/or stops a second timer.

S503: The second communication device stops the second timer.

The first timer indicates duration before a retransmission grant is sent, and the second timer indicates duration of sending retransmission.

When the second communication device determines that there is the reserved resource used to retransmit the first transmission on the sidelink, and/or that the resource used to send the first transmission is a first resource in the at least one resource, the first communication device stops the second timer, and therefore the first communication device does not need to monitor SCI that is associated with a HARQ process corresponding to the first transmission. This reduces power consumption.

In this embodiment of this application, when performing the step S502, the second communication device may further first send the first transmission to the first communication device, and after sending the first transmission, may start the first timer, and/or stop the second timer. Alternatively, after receiving HARQ feedback that is sent by the first communication device, the second communication device may start the first timer and/or stop the second timer.

In this case, the step S502 may include: The second communication device starts the first timer after receiving the HARQ feedback from the first communication device; or when the first communication device does not feed back ACK or the NACK to the second communication (that is, there is no HARQ, or the HARQ is disabled), it is considered that the first communication device further needs to parse the first transmission, m symbols may be required, the second communication device starts the first timer after sending the first transmission and delaying m symbols, where m may be the same as or different from n in the foregoing embodiment. Alternatively, the second communication device starts the first timer after sending the first transmission. Herein, the delay may be understood as that after sending the first transmission, the second communication device waits for m symbols and then starts the first timer.

Further, after performing the steps S502 or S503, the first communication device may further perform step S504: When the first timer expires, the second communication device starts the second timer, monitors a PSCCH and/or a PSSCH, and waits for retransmitting the first transmission.

In some possible implementations, similar to the first communication device, because the first communication device needs to send, to the second communication device, the HARQ feedback corresponding to the first transmission, the second communication device needs to first determine that an attribute of the HARQ feedback corresponding to the first transmission is enabled.

For example, as shown in FIG. 3, it is assumed that the second communication device selects three resources for the first transmission when selecting a resource at a time: S1, S2, and S3. S1 may be a resource used to initially transmit the first transmission, or may be a resource used to retransmit the first transmission. S2 and S3 may be resources used to retransmit the first transmission. If the second communication device sends, to the first communication device, the first transmission (retransmission) on S3, because S3 is the last resource in the three resources, the first communication device and the second communication device may determine that there is no reserved resource used to retransmit the first transmission on the sidelink, and the first communication device and the second communication device may start the first timer, and/or stop the second timer, and therefore the first communication device does not need to keep monitoring the SCI that is associated with the HARQ process corresponding to the first transmission. This reduces the power consumption. If the second communication device sends (may be initial transmission or retransmission), to the first communication device, the first transmission on S1, because S1 is the first resource in the three resources, the first communication device and the second communication device may determine that there is the reserved resource used to retransmit the first transmission on the sidelink, for example, S2 and/or S3, then the first communication device and the second communication device may stop the second timer, and therefore the first communication device does not need to keep monitoring the SCI that is associated with the HARQ process corresponding to the first transmission. This reduces the power consumption.

In this embodiment of this application, the first communication device and the second communication device jointly control, by using the first timer and the second timer, the first communication device to receive data on the sidelink, and therefore the first communication device does not need to keep monitoring the SCI that is associated with the HARQ process corresponding to first transmission. This reduces the power consumption.

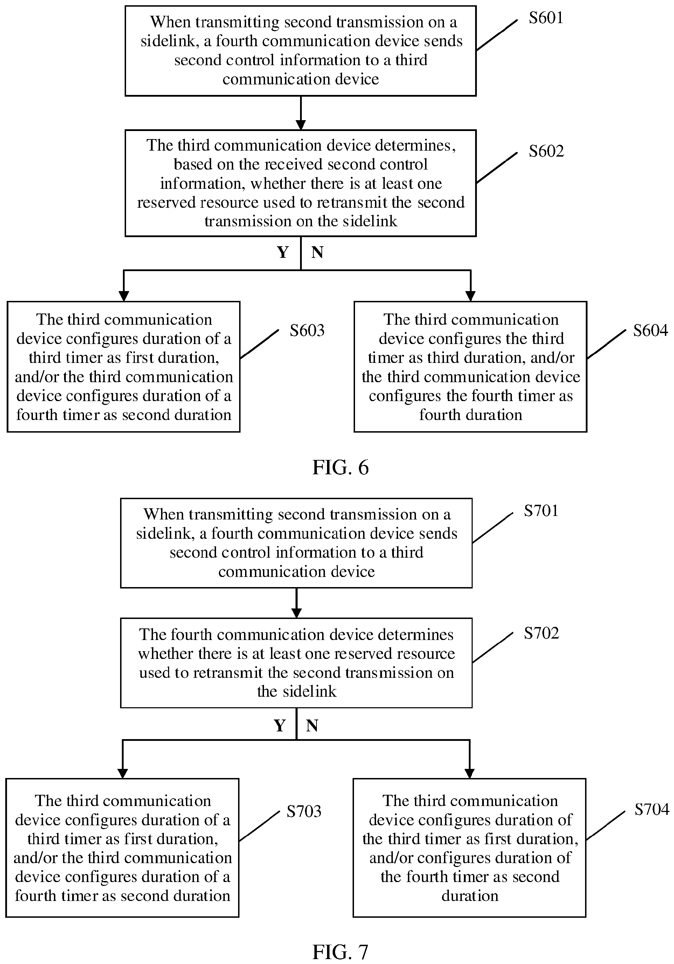

In another embodiment of this application, a communication method is further provided. FIG. 6 is a schematic flowchart of a communication method on a third communication device side according to an embodiment of this application. As shown in FIG. 6, the method may include the following steps.

S601: When transmitting second transmission on a sidelink, a fourth communication device sends second control information to a third communication device.

The second control information indicates a location of at least one resource corresponding to the second transmission on the sidelink, and further indicates whether there is at least one reserved resource used to retransmit the second transmission on the sidelink. The second control information may be SCI.

In this embodiment of this application, the second transmission may be a TB, a MAC PDU, a PSSCH, or the like.

S602: The third communication device determines, based on the second control information, whether there is the at least one reserved resource used to retransmit the second transmission on the sidelink. If there is the at least one reserved resource used to retransmit the second transmission on the sidelink, the third communication device performs step S603. If there is no the at least one reserved resource used to retransmit the second transmission on the sidelink, the third communication device performs step S604.

For a process in which the third communication device performs the step S602, refer to the description of the step S402 in the foregoing embodiment. Details are not described herein again.

S603: The third communication device configures duration of a third timer as first duration, and/or configures duration of a fourth timer as second duration.

Optionally, the third communication device may determine the third duration based on a time domain gap between a first resource and a second resource; and/or the third communication device determines the second duration based on a time difference between time at which the third communication device receives the second transmission and a time at which the third communication device receives the second transmission and time at which the third communication device determines to feed back acknowledgment information.

Herein, in the at least one resource corresponding to the second transmission, the first resource is a resource currently used to transmit the second transmission, may be used to initially transmit the second transmission, or may be used to retransmit the second transmission. The second resource is a resource that is in the at least one reserved resource and that is closest to the first resource in time domain, and the second resource is used to retransmit the second transmission.

In some possible implementations, the duration of the third timer, that is, the first duration, may be determined as gap-k. The gap herein is the time domain gap, and k is the time difference between the time at which the third communication device receives the second transmission from a fourth communication device and the time at which the third communication device determines to feed back the acknowledgment information, or duration of processing the second transmission. Optionally, k is an upper limit of the time difference, and may be 2 or 3. Certainly, k may alternatively be another value. This is not specifically limited in this embodiment of this application.

In some possible implementations, the duration of the fourth timer, that is, the second duration, may be determined as k+s or k-1+s symbols, k is the time difference between the time at which the third communication device receives the second transmission and the time at which the third communication device determines to feed back the acknowledgment information, and s is a quantity of symbols included in one slot configured for a current SCS, for example, 14 symbols. In this way, the third communication device does not start the fourth timer too late, to avoid missing retransmission.

It should be noted that, in this embodiment of this application, meanings of the third timer and the first timer are the same. For specific descriptions, refer to the descriptions of the first timer in the foregoing embodiment. Meanings of the fourth timer and the second timer are the same. For specific descriptions, refer to the descriptions of the second timer in the foregoing embodiment.

After the third communication device performs the step S603 of configuring the duration of the third timer, the method may further include: The third communication device starts the third timer, and/or stops the fourth timer.

In one or more embodiments of this application, that the third communication device starts the third timer may include: The third communication device immediately starts the third timer after sending, to the fourth communication device, HARQ feedback corresponding to the second transmission; the third communication device starts the third timer on a first symbol after sending, to the fourth communication device, the HARQ feedback corresponding to the second transmission; the third communication device may start the third timer after configuring the duration of the third timer; or the third communication device starts the third timer after receiving the second transmission. Certainly, the third communication device may start the third timer in another manner. A process in which the third communication device starts the third timer is not described again in the following embodiment.

It may be understood that after configuring the fourth timer, the third communication device may further start the fourth timer. For example, when the third timer expires, and/or the third communication device fails to decode second transmission that is sent by the fourth communication device, the third communication device starts the fourth timer.

In another embodiment of this application, after performing the step S602 of determining that there is no plurality of reserved resources used to retransmit the second transmission on the sidelink, the third timer may perform the step S604: The third communication device configures the third timer as the third duration, and/or the third communication device configures the fourth timer as the fourth duration.

Optionally, the third communication device configures the duration of the third timer and/or the duration of the fourth timer as configured duration.

In an actual application, a value of the first duration may be the same as or different from a value of the third duration, and a value of the second duration may be the same as or different from a value of the fourth duration. This is not specifically limited in this embodiment of this application.

Herein, the configured duration is duration configured for the third timer and the fourth timer in a communication process of the third communication device and the fourth communication device. In other words, if there is no the reserved resource used to retransmit the second transmission on the sidelink, the third communication device may not configure the duration of the third timer and the duration of the fourth timer in the foregoing manner, but configures the duration of the third timer and/or the duration of the fourth timer by using the configured duration.

In some possible implementations, after the third communication device configures the duration of the third timer and/or the duration of the timer as the configured duration, the third communication device may start the third timer, and/or stop the fourth timer. Herein, the third communication device may start the third timer after sending, to the fourth communication device, the HARQ feedback corresponding to the second transmission.

Optionally, the third communication device determines that an attribute of the HARQ feedback corresponding to the second transmission is enabled.

It is easy to understand that because the third communication device and the fourth communication device are symmetrical, for the process, the second communication device may further perform the following steps.

FIG. 7 is a schematic flowchart of a communication method on a fourth communication device side according to an embodiment of this application. As shown in FIG. 7, the method may include the following steps.

S701: When transmitting second transmission on a sidelink, a fourth communication device sends second control information to a third communication device.

The second control information indicates a location of at least one resource corresponding to the second transmission on the sidelink. The second control information may be SCI.

S702: The fourth communication device determines whether there is the at least one reserved resource used to retransmit the second transmission on the sidelink. If there is the at least one reserved resource used to retransmit the second transmission on the sidelink, the fourth communication device performs step S703. If there is no the at least one reserved resource used to retransmit the second transmission on the sidelink, the fourth communication device performs step S704.

S703: The fourth communication device configures duration of a third timer based on a time domain gap between a first resource and a second resource in a plurality of reserved resources.

After performing the step S702, the fourth communication device may further perform step S705: The fourth communication device configures duration of a fourth timer based on a time difference between time at which the third communication device receives the second transmission from the fourth communication device and time at which the third communication device determines to feed back acknowledgment information.

Herein, the time difference between time at which the third communication device receives the second transmission from the fourth communication device and time at which the third communication device determines to feed back acknowledgment information may be notified by the third communication device to the fourth communication device, may be negotiated by the third communication device and the fourth communication device in advance, or may be specified in a protocol. This is not specifically limited in this embodiment of this application.

In this embodiment of this application, after configuring the third timer and the fourth timer and after receiving HARQ feedback that corresponds to the second transmission and that is sent by the third communication device, the fourth communication device may further start the third timer, and/or stop the fourth timer.

It should be noted that, in one or more embodiments of this application, that the fourth communication device starts the third timer may include: The fourth communication device immediately starts the third timer after receiving the HARQ feedback that corresponds to the second transmission and that is sent by the third communication device, or the fourth communication device starts the third timer on a first symbol after receiving the HARQ feedback corresponding to the second transmission. Details are not described in the following embodiments.

Optionally, when the third timer expires, the fourth communication device starts the fourth timer.

S704: The fourth communication device configures the duration of the third timer and/or the duration of the fourth timer as configured duration.

It should be noted that, for a process in which the fourth communication device configures the third timer and the fourth timer, refer to the process in which the third communication device configures the third timer and the fourth timer in the foregoing embodiment. Details are not described again.

In some possible implementations, after configuring the third timer and the fourth timer, the fourth communication device may use the two timers. In this case, after receiving the HARQ feedback from the third communication device, the fourth communication device may start the third timer, and/or stop the fourth timer.

For example, still as shown in FIG. 3, it is assumed that the fourth communication device selects three resources for the second transmission when selecting a resource at a time: S1, S2, and S3. S1 may be a resource used to initially transmit the second transmission, or may be a resource used to retransmit the second transmission. S2 and S3 may be resources used to retransmit the second transmission. If the fourth communication device sends the second transmission (retransmission) to the third communication device on S2, because S2 is the second resource in the three resources, the third communication device and the fourth communication device may determine that there is a reserved resource used to retransmit the second transmission on the sidelink, and then the third communication device and the fourth communication device may configure duration of the third timer based on an interval between S2 and the resource S3 closest to S2, and/or the third communication device configures the fourth timer based on the time difference between the time at which the third communication device receives the second transmission from the fourth communication device and the time at which the third communication device determines to feed back the acknowledgment information. After configuring the third timer and the fourth timer, the third communication device and the four communication device may start the third timer, and/or stop the fourth timer. In this case, the third communication device does not need to monitor SCI that is associated with a HARQ process corresponding to the second transmission. This reduces power consumption. If the fourth communication device sends the second transmission (retransmission) to the third communication device on S3, because S3 is the last resource in the three resources, the third communication device and the fourth communication device may determine that there is no the reserved resource used to retransmit the first transmission on the sidelink, and then the third communication device and the fourth communication device may stop the second timer. In this case, the third communication device does not need to monitor the SCI that is associated with the HARQ process corresponding to the second transmission. This reduces the power consumption.

In this embodiment of this application, the third communication device and the fourth communication device jointly control, by using the third timer and the fourth timer, the third communication device to receive data on the sidelink, and therefore the third communication device does not need to keep monitoring the SCI that is associated with the HARQ process corresponding to the second transmission. This reduces the power consumption.

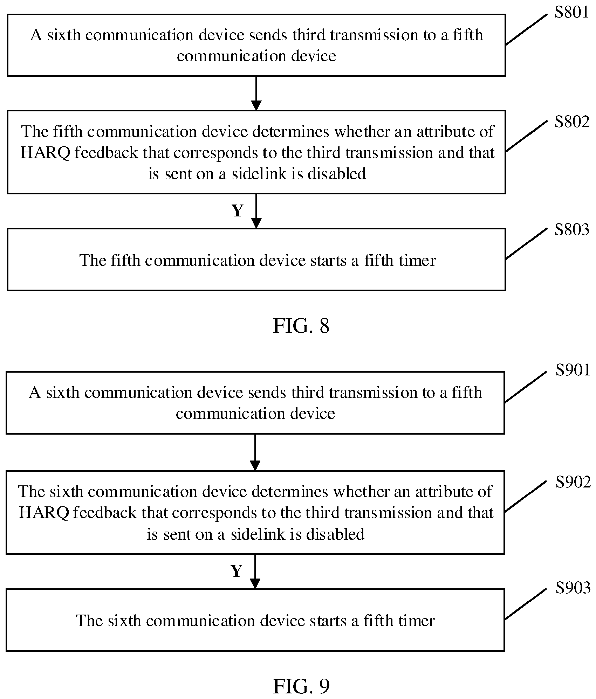

In another embodiment of this application, an embodiment of this application further provides a communication method. FIG. 8 is a schematic flowchart of a communication method on a fifth communication device side according to an embodiment of this application. As shown in FIG. 8, the method may include the following steps.

S801: A sixth communication device sends third transmission to a fifth communication device.

In some possible implementations, when initially transmitting the third transmission, the sixth communication device may further send third control information to the fifth communication device. The third control information may be SCI. The third control information indicates whether the sixth communication device performs blind retransmission for the third transmission.

S802: The fifth communication device determines whether an attribute of HARQ feedback that corresponds to the third transmission and that is sent on a sidelink is disabled. If the fifth communication device determines that the attribute of the HARQ feedback is disabled, the fifth communication device performs step S803. In this case, the fifth communication device does not determine a location of the blind retransmission in advance.

In this embodiment of this application, in addition to determining whether the attribute of the HARQ feedback corresponding to the third transmission is disabled, the fifth communication device may further determine whether the fifth communication device successfully decodes the third transmission. If the attribute of the HARQ feedback is disabled and the fifth communication device fails to decode the third transmission, the fifth communication device may perform the step S803. In this case, the fifth communication device does not give the HARQ feedback to the sixth communication device, and the sixth communication device may perform the blind retransmission for the third transmission.

S803: The fifth communication device starts a fifth timer.

It is easy to understand that because the fifth communication device and the sixth communication device are symmetrical, for the process, the sixth communication device may further perform the following steps.

In another embodiment of this application, an embodiment of this application further provides a communication method. FIG. 9 is a schematic flowchart of a communication method on a sixth communication device side according to an embodiment of this application. As shown in FIG. 9, the method may include the following steps.

S901: A sixth communication device sends third transmission to a fifth communication device.

In some possible implementations, when initially transmitting the third transmission, the sixth communication device may further send a third control information to the sixth communication device. The third control information may be SCI. The third control information indicates whether the sixth communication device performs blind retransmission for the third transmission.

S902: The sixth communication device determines whether an attribute of HARQ feedback that corresponds to the third transmission and that is sent on a sidelink is disabled. If the sixth communication device determines that the attribute of the HARQ feedback is disabled, the sixth communication device performs step S903.

In this embodiment of this application, if the attribute of the HARQ feedback is disabled, the fifth communication device does not give the HARQ feedback to the sixth communication device, and the sixth communication device may perform the blind retransmission for the third transmission.

S903: The sixth communication device starts a fifth timer.

In this embodiment of this application, when the sixth communication device determines that the attribute of the HARQ feedback that corresponds to the third transmission and that is sent on the sidelink is disabled, the sixth communication device starts the fifth timer after sending the third transmission to the fifth communication device and delaying h symbols. Herein, the delay may be understood to that after sending the first transmission, the second communication device waits for m symbols and then starts the first timer, to avoid missing the retransmission.

In some possible implementations, the method further includes: When the fifth timer expires, the sixth communication device starts a sixth timer.

It should be noted that, in the foregoing one or more embodiments, for the second transmission and the third transmission, refer to the description of the first transmission in the one or more embodiments. The first communication device, the third communication device, and the fifth communication device are used as transmit devices. The second communication device, the fourth communication device, and the sixth communication device are used as receive devices. Mutual reference may be made between the embodiment of the transmit device and the embodiment of the receive device. This is not specifically limited in this embodiment of this application.

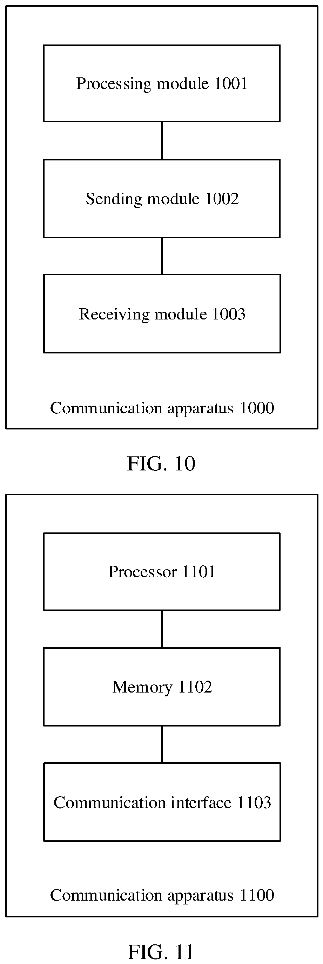

Based on a same inventive concept, an embodiment of this application provides a communication apparatus. The communication apparatus may be a chip or a system on chip in a first communication device, or may be a function module that is disposed in the first communication device and configured to implement the method in any one of the foregoing embodiments. The chip or the system on chip includes a memory. The memory stores instructions. When the instructions are invoked by the system on chip or the chip, the system on chip or the chip is enabled to perform the foregoing method. FIG. 10 is a schematic diagram of a structure of a communication apparatus according to an embodiment of this application. As shown in FIG. 10, a communication apparatus 1000 may include a processing module 1001, configured to: when there is no reserved resource used to retransmit first transmission on a sidelink, start a first timer, and/or stop a second timer; or when there is a reserved resource used to retransmit first transmission on a sidelink, and/or a resource used to transmit first transmission is a first resource in at least one resource corresponding to the first transmission, stop a second timer.

The first timer indicates duration before a retransmission grant is received, and the second timer indicates duration of receiving retransmission.

In some possible implementations, the apparatus 1000 may further include: a sending module 1002, configured to send, to a second communication device, HARQ feedback corresponding to the first transmission on the sidelink; and a receiving module 1003, configured to receive the first transmission that is sent by the second communication device. Correspondingly, the processing module is configured to start the first timer after the sending module sends the HARQ feedback corresponding to the first transmission, or start the first timer on a first symbol after the sending module sends the HARQ feedback.

In some possible implementations, the sending module is configured to send, to the second communication device, the HARQ feedback corresponding to the first transmission on the sidelink. The processing module is further configured to: stop the second timer after the sending module sends the HARQ feedback corresponding to the first transmission, stop the second timer on the first symbol after the sending module sends the HARQ feedback, or start the first timer after the receiving module receives the first transmission.

In some possible implementations, the processing module is further configured to: when the first timer expires, and/or the first transmission that is sent by the second communication device is not successfully decoded, start the second timer.

In some possible implementations, the processing module is further configured to: before starting the first timer, determine that an attribute of the HARQ feedback corresponding to the first transmission is enabled.

In some possible implementations, the apparatus 1000 further includes: a receiving module 1003, configured to receive first control information from the second communication device; and a processing module, configured to determine, based on the first control information, whether there is the reserved resource used to retransmit the first transmission, and/or whether the resource used to transmit the first transmission is not the first resource in the at least one resource corresponding to the first transmission.

It should be noted that the sending module may be a sending interface, a sending circuit, a transmitter, or the like; the receiving module may be a receiving interface, a receiving circuit, a receiver, or the like. The processing module may be one or more processors.

Based on a same inventive concept, an embodiment of this application provides a communication apparatus. The communication apparatus may be a chip or a system on chip in a second communication device, or may be a function module that is disposed in the second communication device and configured to implement the method in any one of the foregoing embodiments. The chip or the system on chip includes a memory. The memory stores instructions. When the instructions are invoked by the system on chip or the chip, the system on chip or the chip is enabled to perform the foregoing method. Still as shown in FIG. 10, the communication apparatus 1000 may include a processing module 1001, configured to: when there is no reserved resource used to retransmit first transmission on a sidelink, start a first timer, and/or stop a second timer, where the first timer indicates duration before a retransmission grant is sent, and the second timer indicates duration of sending retransmission; or when there is a reserved resource used to retransmit first transmission on a sidelink, and/or the resource used to transmit first transmission is a first resource in at least one resource corresponding to the first transmission, stop the second timer, where the at least one reserved resource corresponding to the first transmission is obtained by selecting a resource for the first transmission.

In some possible implementations, the processing module is further configured to: when the first timer expires, start the second timer.

In some possible implementations, the apparatus further includes: a receiving module 1003 and sending module 1002, where the receiving module is configured to receive HARQ feedback that corresponds to second transmission and that is sent by a first communication device; and a processing module, configured to start the first timer after the receiving module receives the HARQ feedback. Alternatively, the apparatus includes: a sending module, configured to send, to the first communication device, the first transmission on the sidelink; and a processing module, configured to: start the first timer after the sending module sends the first transmission and delays m symbols, where m is a positive integer; or start the first timer after the sending module sends the first transmission.

In some possible implementations, the apparatus further includes: a sending module, configured to send, to the first communication device, the first transmission on the sidelink; and a processing module, configured to stop the second timer after the sending module sends the first transmission.

In some possible implementations, the processing module is further configured to: before starting the first timer, determine that an attribute of the HARQ feedback corresponding to the first transmission is enabled.

It should be noted that the sending module may be a sending interface, a sending circuit, a transmitter, or the like; the receiving module may be a receiving interface, a receiving circuit, a receiver, or the like. The processing module may be one or more processors.

Based on a same inventive concept, this application provides a communication apparatus. The communication apparatus may be a chip or a system on chip in a third communication device, or may be a function module that is disposed in the third communication device and configured to implement the method in any one of the foregoing embodiments. The chip or the system on chip includes a memory. The memory stores instructions. When the instructions are invoked by the system on chip or the chip, the system on chip or the chip is enabled to perform the foregoing method. Still as shown in FIG. 10, the communication apparatus 1000 may include a processing module 1001, configured to: when there is at least one reserved resource used to retransmit second transmission on a sidelink, configure duration of a third timer as first duration, and/or configure duration of a fourth timer as second duration, or when there is no at least one reserved resource used to retransmit second transmission on a sidelink, a third communication device configures duration of a third timer as third duration, and/or configure duration of a fourth timer as fourth duration.

The third timer indicates duration before a retransmission grant is sent, and the fourth timer indicates duration of sending retransmission.

Optionally, the processing module is configured to determine the first duration based on a time domain gap between a first resource and a second resource in the at least one reserved resource, and/or the processing module is configured to determine the second duration based on a time difference between time at which the third communication device receives the second transmission and time at which the third communication device determines to feed back acknowledgment information, where the first resource is used to transmit the second transmission, and the second resource is a resource that is in the at least one reserved resource and is closest to a first resource in time domain.

In this application, the second transmission may be a TB, a MAC PDU, or the like.

Optionally, the third duration is configured duration, and/or the fourth duration is configured duration.

In some possible implementations, the first duration is configured as gap-k, where gap is a time domain gap, and k is the time difference between the time at which the third communication device receives the second transmission from a fourth communication device and the time at which the third communication device determines to feed back the acknowledgment information.

In some possible implementations, k is 2 or 3.

In some possible implementations, the processing module is further configured to: after configuring the duration of the third timer as the third duration, and/or configuring the duration of the fourth timer as the fourth duration, start the third timer, and/or stop the fourth timer.

In some possible implementations, the second duration is k+s or k-1+s symbols, k is the time difference, and s is a quantity of symbols included in one slot.

In some possible implementations, the processing module is further configured to: after configuring the duration of the fourth timer as the second duration, and/or configuring the duration of the fourth timer as the fourth duration, start the fourth timer.

In some possible implementations, the processing module is further configured to: when the third timer expires, and/or the second transmission is not successfully decoded, start the fourth timer.

In some possible implementations, the processing module is configured to: after determining the third duration as the configured duration, and/or determining the fourth duration as configured duration, start the third timer, and/or stop the fourth timer.

In some possible implementations, the sending module 1002 is further configured to send, to the fourth communication device, HARQ feedback corresponding to the second transmission on the sidelink; and the processing module is further configured to start the third timer after the sending module sends the HARQ feedback corresponding to the second transmission.

In some possible implementations, the processing module is further configured to start the third timer on a first symbol after the sending module sends the HARQ feedback corresponding to the second transmission.

In some possible implementations, the processing module is further configured to: before configuring the duration of the third timer, determine that an attribute of the HARQ feedback corresponding to the second transmission is enabled.

Based on the ninth aspect, in some possible implementations, the apparatus 1000 further includes: a receiving module 1003, configured to receive second control information from the fourth communication device; and a processing module, configured to determine, based on the second control information, whether there is the at least one reserved resource used to retransmit the second transmission on the sidelink.

It should be noted that the sending module may be a sending interface, a sending circuit, a transmitter, or the like; the receiving module may be a receiving interface, a receiving circuit, a receiver, or the like. The processing module may be one or more processors.

Based on a same inventive concept, an embodiment of this application provides a communication apparatus. The communication apparatus may be a chip or a system on chip in a fourth communication device, or may be a function module that is disposed in the fourth communication device and configured to implement the method in any one of the foregoing embodiments. The chip or the system on chip includes a memory. The memory stores instructions. When the instructions are invoked by the system on chip or the chip, the system on chip or the chip is enabled to perform the foregoing method. Still as shown in FIG. 10, the communication apparatus 1000 may include: a processing module 1001, configured to: configure duration of a third timer as first duration, and/or configure duration of a fourth timer as second duration; or a processing module, configured to: when there is no at least one reserved resource used to retransmit second transmission on a sidelink, configure duration of a third timer as third duration, and/or configure duration of a fourth timer as fourth duration.

The third timer indicates duration before a retransmission grant is sent, and the fourth timer indicates duration of sending retransmission.

Optionally, the processing module is configured to determine the first duration based on a time domain gap between a first resource and a second resource in the at least one reserved resource, and/or the processing module is configured to determine the second duration based on a time difference between time at which a third communication device receives the second transmission and time at which the third communication device determines to feed back acknowledgment information, where the first resource is used to transmit the second transmission, and the second resource is a resource that is in the at least one reserved resource and is closest to a first resource in time domain.

In this application, the second transmission may be a TB, a MAC PDU, or the like.

Optionally, the third duration is configured duration, and/or the fourth duration is configured duration.

In some possible implementations, the first duration is gap-k, where gap is a time domain gap, and k is the time difference between the time at which the third communication device receives the second transmission from the fourth communication device and the time at which the third communication device determines to feed back the acknowledgment information.

In some possible implementations, k is 2 or 3.

In some possible implementations, the second duration is k+s or k-1+s symbols, k is the time difference, and s is a quantity of symbols included in one slot.

In some possible implementations, the apparatus 1000 further includes: a receiving module 1003, configured to receive HARQ feedback that corresponds to the second transmission and that is sent by the third communication device; and a processing module, further configured to: when there is the reserved resource used to retransmit the second transmission on the sidelink, after the receiving module receives the HARQ feedback, start the third timer, and/or stop the fourth timer.

In some possible implementations, the processing module is further configured to: when the third timer expires, start the fourth timer.

In some possible implementations, the receiving module is configured to receive the HARQ feedback that corresponds to the second transmission and that is sent by the third communication device; and the processing module is further configured to: after configuring the duration of the third timer to the third duration, and/or configuring the duration of the fourth timer to the fourth duration, and receiving the HARQ feedback corresponding to the second transmission from the third communication device, start the third timer, and/or stop the fourth timer.

In some possible implementations, the processing module is configured to start the third timer in a first symbol after the receiving module receives the HARQ feedback corresponding to the second transmission.

In some possible implementations, the processing module is further configured to: before configuring the duration of the third timer, determine that an attribute of the HARQ feedback corresponding to the second transmission is enabled.

Based on the tenth aspect, in some possible implementations, the sending module is further configured to send second control information to the third communication device, where the second control information indicates whether there is the at least one reserved resource used to retransmit the second transmission on the sidelink.

It should be noted that the sending module may be a sending interface, a sending circuit, a transmitter, or the like; the receiving module may be a receiving interface, a receiving circuit, a receiver, or the like. The processing module may be one or more processors.

Based on a same inventive concept, an embodiment of this application provides a communication apparatus. The communication apparatus may be a chip or a system on chip in a fifth communication device, or may be a function module that is disposed in the fifth communication device and configured to implement the method in any one of the foregoing embodiments. The chip or the system on chip includes a memory. The memory stores instructions. When the instructions are invoked by the system on chip or the chip, the system on chip or the chip is enabled to perform the foregoing method. Still as shown in FIG. 10, the communication apparatus 1000 may include: a receiving module 1103, configured to receive third transmission that is sent by a sixth communication device on a sidelink; and a processing module 1001, configured to: when an attribute of HARQ feedback corresponding to the third transmission is disabled, and/or the third transmission is not successfully decoded, start a fifth timer, where the fifth timer indicates duration before a retransmission grant is received.

In some possible implementations, the processing module is configured to: when the fifth timer expires, start a sixth timer, where the sixth timer indicates duration of receiving retransmission.

In some possible implementations, the processing module is configured to: when the attribute of the HARQ feedback corresponding to the third transmission is disabled, determine that the sixth communication device performs blind retransmission for the third transmission.

In some possible implementations, the receiving module is configured to receive third control information that is sent by the sixth communication device; and the processing module is configured to determine, based on the received third control information, that the sixth communication device performs the blind retransmission for the third transmission, where the third control information is control information that corresponds to the third transmission and that is sent by the sixth communication device on the sidelink.

It should be noted that the receiving module may be a receiving interface, a receiving circuit, a receiver, or the like. The processing module may be one or more processors.

Based on a same inventive concept, an embodiment of this application provides a communication apparatus. The communication apparatus may be a chip or a system on chip in a sixth communication device, or may be a function module that is disposed in the sixth communication device and configured to implement the method in any one of the foregoing embodiments. The chip or the system on chip includes a memory. The memory stores instructions. When the instructions are invoked by the system on chip or the chip, the system on chip or the chip is enabled to perform the foregoing method. Still as shown in FIG. 10, the communication apparatus 1000 may include: a sending module 1002, configured to send third transmission to a fifth communication device on a sidelink; and a processing module 1001, configured to: when an attribute of HARQ feedback corresponding to the third transmission is disabled, after sending the third transmission to the fifth communication device and delaying h symbols, start a fifth timer, where the fifth timer indicates duration before a retransmission grant is sent.

In some possible implementations, the processing module is further configured to: when the fifth timer expires, the sixth communication device starts a sixth timer, where the sixth timer indicates duration of sending retransmission.

In some possible implementations, the processing module is further configured to: when the attribute of the HARQ feedback corresponding to the third transmission is disabled, determine to perform blind retransmission for the third transmission.

It should be noted that the sending module may be a sending interface, a sending circuit, a transmitter, or the like. The processing module may be one or more processors.

Based on a same inventive concept, an embodiment of this application provides a communication apparatus. FIG. 11 is a schematic diagram of another structure of a communication apparatus according to an embodiment of this application. As shown in FIG. 11, a communication apparatus 1100 may include a processor 1101, a memory 1101, and a communication interface 1103. The processor 1101 is coupled to the memory 1102, and the processor 1101 is configured to read and execute instructions in the memory 1102, to implement the communication method performed by the first communication device, the third communication device, and the fifth communication device in any one of the foregoing embodiments. The communication interface 1103 is configured to communicate with a second communication device, a fourth communication device, or a sixth communication device.

Based on a same inventive concept, an embodiment of this application provides a communication apparatus. Still as shown in FIG. 11, the communication apparatus 1100 may include a processor 1101, a memory 1102, and a communication interface 1103. The processor 1101 is coupled to the memory 1102, and the processor 1101 is configured to read and execute instructions in the memory 1102, to implement the communication method performed by the second communication device, the fourth communication device, and the sixth communication device in any one of the foregoing embodiments. The communication interface 1103 is configured to communicate with a first communication device, a third communication device, or a fifth communication device.

Based on a same inventive concept, an embodiment of this application provides a computer-readable storage medium. The computer-readable storage medium stores instructions, and when the instructions run on a computer, the computer performs the communication method in any one of the first aspect to the sixth aspect, and the possible implementations thereof.

Based on a same inventive concept, an embodiment of this application provides a computer program or a computer program product. When the computer program or the computer program product is executed on a computer, the computer is enabled to implement any communication method in any one of the first aspect to the sixth aspect, and the possible implementations thereof.

A person skilled in the art can appreciate that functions described with reference to various illustrative logical blocks, modules, and algorithm steps disclosed and described herein may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communication medium that facilitates transmission of a computer program from one place to another (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. The computer program product may include a computer-readable medium.

By way of example and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (digital subscriber line, DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (compact disc, CD), a laser disc, an optical disc, a digital versatile disc (digital versatile disc, DVD), and a Blu-ray disc. The disks usually reproduce data magnetically, whereas the discs reproduce data optically by using lasers. Combinations of the above should also be included within the scope of the computer-readable medium.

Instructions may be executed by one or more processors such as one or more digital signal processors (DSP), a general microprocessor, an application-specific integrated circuit (ASIC), a field programmable gate array (FPGA), or an equivalent integrated circuit or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

The technologies in this application may be implemented in various apparatuses or devices, including a wireless handset, an integrated circuit (integrated circuit, IC), or a set of ICs (for example, a chip set). Various components, modules, or units are described in this application to emphasize functional aspects of devices configured to perform the disclosed techniques, but do not necessarily require realization by different hardware units. Actually, as described above, various units may be combined in an encoder and decoder hardware unit in combination with appropriate software and/or firmware, or may be provided by interoperable hardware units (including one or more processors described above).

In the foregoing embodiments, the description of each embodiment has respective focuses. For a part that is not described in detail in an embodiment, refer to related descriptions in other embodiments.

The foregoing descriptions are merely example specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
when there is no reserved resource used to retransmit first transmission on a sidelink, starting, by a first communication device, a first timer, and/or stopping a second timer; or
when there is a reserved resource used to retransmit first transmission on a sidelink, and/or when a resource used to transmit the first transmission is a first resource in at least one resource corresponding to the first transmission, stopping, by a first communication device, a second timer, wherein the at least one resource corresponding to the first transmission is obtained by selecting or reselecting a resource for the first transmission; and
the first timer indicates duration before a retransmission grant is received, and the second timer indicates duration of receiving retransmission.

2. The method according to claim 1, wherein the starting, by a first communication device, a first timer comprises:
starting, by the first communication device, the first timer after sending, to a second communication device, hybrid automatic retransmission request HARQ feedback corresponding to the first transmission on the sidelink; or
starting, by the first communication device, the first timer on a first symbol after sending the HARQ feedback; or
starting, by the first communication device, the first timer after receiving the first transmission.

3. The method according to claim 1 or 2, wherein the stopping, by a first communication device, a second timer comprises:
stopping, by the first communication device, the second timer after sending, to the second communication device, the HARQ feedback corresponding to the first transmission on the sidelink; or
stopping, by the first communication device, the second timer on the first symbol after sending the HARQ feedback.

4. The method according to any one of claims 1 to 3, wherein the method further comprises:
when the first timer expires, and/or the first communication device fails to decode first transmission that is sent by the second communication device, starting, by the first communication device, the second timer.

5. The method according to claims 1 to 4, wherein duration of a first timer of the first communication device is the same as that of a first timer of the second communication device, and duration of a second timer of the first communication device is the same as that of a second timer of the second communication device; or
duration of a first timer of the second communication device is n symbols longer than that of the first timer of the first communication device, duration of the second timer of the first communication device is the same as that of a second timer of the second communication device, and n is a positive integer.

6. The method according to any one of claims 1 to 5, wherein before the starting, by a first communication device, a first timer, the method further comprises:
determining, by the first communication device, that an attribute of the HARQ feedback corresponding to the first transmission is enabled.

7. The method according to any one of claims 1 to 6, wherein the first timer and the second timer correspond to a HARQ process corresponding to the first transmission.

8. The method according to any one of claims 1 to 7, wherein the method further comprises:
receiving, by the first communication device, first control information from the second communication device;
determining, by the first communication device based on the first control information, that there is the reserved resource used to retransmit the first transmission, and/or that the resource used to transmit the first transmission is the first resource in the at least one resource corresponding to the first transmission; or
determining, by the first communication device based on the first control information, that there is no reserved resource used to retransmit the first transmission, and/or that the resource used to transmit the first transmission is not the first resource in the at least one resource corresponding to the first transmission.

9. A communication method, comprising:
when there is no reserved resource used to retransmit first transmission on a sidelink, starting, by a second communication device, a first timer, and/or stopping a second timer; or
when there is a reserved resource used to retransmit first transmission on a sidelink, and/or when a resource used to transmit the first transmission is a first resource in at least one resource corresponding to the first transmission, stopping, by a second communication device, a second timer, wherein the at least one reserved resource corresponding to the first transmission is obtained by selecting or reselecting a resource for the first transmission; and
the first timer indicates duration before a retransmission grant is sent, and the second timer indicates duration of sending retransmission.

10. The method according to claim 9, wherein the method further comprises:
when the first timer expires, starting, by the second communication device, the second timer.

11. The method according to claim 9 or 10, wherein the starting, by a second communication device, a first timer comprises:
starting, by the second communication device, the first timer after receiving hybrid automatic retransmission request HARQ feedback that corresponds to the first transmission and that is sent by a first communication device; or
starting, by the second communication device, the first timer after sending the first transmission and delaying m symbols, wherein m is a positive integer; or
starting, by the second communication device, the first timer after sending the first transmission.

12. The method according to any one of claim 9 or 11, wherein the stopping, by a second communication device, a second timer comprises:
stopping, by the second communication device, the second timer after sending, to the first communication device, the first transmission on the sidelink.

13. The method according to any one of claims 9 to 12, wherein duration of the first timer of the second communication device is the same as that of a first timer of the first communication device, and duration of the second timer of the first communication device is the same as that of a second timer of the first communication device; or
duration of the first timer of the second communication device is n symbols longer than that of the first timer of the first communication device, duration of the second timer of the first communication device is the same as that of a second timer of the first communication device, and n is a positive integer.

14. The method according to any one of claims 9 to 13, wherein before the starting, by a second communication device, a first timer, the method further comprises:
determining, by the second communication device, that an attribute of the HARQ feedback corresponding to the first transmission is enabled.

15. The method according to any one of claims 9 to 14, wherein the first timer and the second timer correspond to a HARQ process corresponding to the first transmission.

16. A communication method, comprising:
when there is at least one reserved resource used to retransmit second transmission on a sidelink, configuring, by a third communication device, duration of a third timer as first duration, and/or configuring, by a third communication device, duration of a fourth timer as second duration; or
when there are no plurality of reserved resources on a sidelink, configuring, by the third communication device, duration of a third timer as third duration, and/or configuring, by the third communication device, duration of a fourth timer as fourth duration; and
the third timer indicates duration before a retransmission grant is received, and the fourth timer indicates duration of receiving retransmission.

17. The method according to claim 16, wherein the method further comprises:
determining, by the third communication device, the first duration based on a time domain gap between a first resource and a second resource in the at least one reserved resource, and/or determining, by the third communication device, the fourth duration based on a time difference between time at which the third communication device receives the second transmission and time at which the third communication device determines to feed back acknowledgment information; and
the first resource is used to transmit the second transmission, and the second resource is a resource that is in the at least one reserved resource and that is closest to the first resource in time domain.

18. The method according to claim 16 or 17, wherein the first duration is gap-k, the gap is the time domain gap, and k is the time difference between the time at which the third communication device receives the second transmission from a fourth communication device and the time at which the third communication device determines to feed back the acknowledgment information.

19. The method according to claim 18, wherein k is 2 or 3.

20. The method according to any one of claims 16 to 19, wherein after the configuring, by a third communication device, duration of a third timer as first duration, or configuring, by a third communication device, duration of a third timer as third duration, the method further comprises:
starting, by the third communication device, the third timer, and/or stopping the fourth timer.

21. The method according to any one of claims 16 to 20, wherein the second duration is k+s or k-1+s symbols, k is the time difference, and s is a quantity of symbols comprised in one slot.

22. The method according to any one of claims 16 to 21, wherein the method further comprises:
when the third timer expires, and/or the third communication device fails to decode second transmission that is sent by the fourth communication device, starting, by the third communication device, the fourth timer.

23. The method according to any one of claims 16 to 22, wherein the method further comprises:
determining, by the third communication device, the third duration as configured duration, and/or determining the fourth duration as configured duration.

24. The method according to claim 23, wherein after the determining, by the third communication device, the third duration as configured duration, and/or determining the fourth duration as configured duration, the method further comprises:
starting, by the third communication device, the third timer, and/or stopping the fourth timer.

25. The method according to claims 16 to 24, wherein the starting, by the third communication device, the third timer comprises:
starting, by the third communication device, the third timer after sending HARQ feedback corresponding to the second transmission.

26. The method according to claim 25, wherein the starting, by the third communication device, the third timer after sending, to the fourth communication device, HARQ feedback corresponding to the second transmission comprises:
starting, by the third communication device, the third timer on a first symbol after sending the HARQ feedback corresponding to the second transmission.

27. The method according to any one of claims 16 to 26, wherein the method further comprises:
determining, by the third communication device, that an attribute of the HARQ feedback corresponding to the second transmission is enabled.

28. The method according to any one of claims 16 to 27, wherein the third timer and the fourth timer correspond to a HARQ process corresponding to the second transmission.

29. The method according to any one of claims 16 to 28, wherein the method further comprises:
determining, by the third communication device based on second control information received from the fourth communication device, whether there is the at least one reserved resource used to retransmit the second transmission on the sidelink.

30. A communication method, comprising:
when an attribute of hybrid automatic retransmission request HARQ feedback that corresponds to third transmission and that is received on a sidelink is disabled, and/or a fifth communication device fails to decode the third transmission, starting, by the fifth communication device, a fifth timer, wherein the fifth timer indicates duration before a retransmission grant is received.

31. The method according to claim 30, wherein the method further comprises:
when the fifth timer expires, starting, by the fifth communication device, a sixth timer, wherein the sixth timer indicates duration of receiving retransmission.

32. The method according to claim 30 or 31, wherein the method further comprises:
when the fifth communication device determines that the attribute of the HARQ feedback corresponding to the third transmission is disabled, determining, by the fifth communication device, that a sixth communication device performs blind retransmission for the third transmission.

33. The method according to claim 32, wherein the determining, by the fifth communication device, that a sixth communication device performs blind retransmission for the third transmission comprises:
determining, by the fifth communication device based on a received third control information, that the sixth communication device performs the blind retransmission for the third transmission, wherein the third control information is control information that corresponds to the third transmission and that is sent by the sixth communication device on the sidelink.

34. A communication method, comprising:
when an attribute of hybrid automatic retransmission request HARQ feedback corresponding to third transmission that is sent on a sidelink is disabled, starting, by a sixth communication device, a fifth timer after sending the third transmission to a fifth communication device and delaying h symbols, wherein the fifth timer indicates duration before a retransmission grant is sent.

35. The method according to claim 34, wherein the method further comprises:
when the fifth timer expires, starting, by the sixth communication device, a sixth timer, wherein the sixth timer indicates duration of sending retransmission.

36. The method according to claim 34 or 35, wherein the method further comprises:
when the sixth communication device determines that the attribute of the HARQ feedback corresponding to the third transmission is disabled, determining, by the sixth communication device, to perform blind retransmission for the third transmission.

37. A communication device, comprising a processor, a memory, and a communication interface, wherein the processor is coupled to the memory, and the processor is configured to read and execute instructions in the memory, to implement the communication method according to any one of claims 1 to 8, 16 to 29, and/or 30 to 33.

38. A communication device, comprising a processor, a memory, and a communication interface, wherein the processor is coupled to the memory, and the processor is configured to read and execute instructions in the memory, to implement the communication method according to any one of claims 9 to 15 and/or 34 to 36.

39. A communication apparatus, comprising a module configured to perform the method according to any one of claims 1 to 8, claims 16 to 29, and claims 30 to 33.

40. A communication apparatus, comprising a module configured to perform the method according to any one of claims 1 to 9 and claims 34 to 36.

41. A communication apparatus, comprising a processor and a memory, wherein the processor is coupled to the memory, and the processor is configured to control the apparatus to implement the method according to any one of claims 1 to 8, claims 16 to 29, and claims 30 to 33.

42. A communication apparatus, comprising a processor and a memory, wherein the processor is coupled to the memory, and the processor is configured to control the apparatus to implement the method according to any one of claims 9 to 15 and claims 34 to 36.

43. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 8, claims 16 to 29, and claims 30 to 33 by using a logic circuit or executing code instructions.

44. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 9 to 15 and claims 34 to 36 by using a logic circuit or executing code instructions.

45. A computer-readable storage medium, wherein the storage medium stores a computer program or instructions, and when the computer program or the instructions is/are executed by a communication apparatus, the method according to any one of claims 1 to 36 is implemented.

46. A communication system, comprising the communication apparatus according to any one of claims 37, 39, 41, and 43 and the communication apparatus according to any one of claims 38, 40, 42, and 44.

47. A computer program product, wherein the computer program product comprises instructions; and when the instructions are run on a computer, the computer executes the method according to any one of claims 1 to 36.
